# EUROPÄISCHE PATENTSCHRIFT

(11) **EP 2 834 294 B1**
(45) Veröffentlichungstag und Bekanntmachung des Hinweises auf die Patenterteilung: **01.08.2018**
(21) Anmeldenummer: 13708446.3
(22) Anmeldetag: 11.03.2013
(51) Int. Cl.: C08K 3/04, C08K 13/00

(54) **MERCAPTOSILAN-RUSS-ABMISCHUNG**
MERCAPTOSILANE-CARBON BLACK BLEND
MÉLANGE DE MERCAPTOSILANES ET DE NOIR DE CARBONE

(30) Priorität: 05.04.2012 DE 102012205642
(43) Veröffentlichungstag der Anmeldung: 11.02.2015
(73) Patentinhaber: Evonik Degussa GmbH, 45128 Essen (DE)
(72) Erfinder: BLUME, Anke, 53919 Weilerswist (DE); KLOCKMANN, Oliver, 52382 Niederzier (DE)
(86) Internationale Anmeldenummer: PCT/EP2013/054847
(87) Internationale Veröffentlichungsnummer: WO 2013/149790

(56) Entgegenhaltungen:
- EP-A2- 1 367 059
- EP-A2- 1 683 801
- DE-A1-102009 023 915

## Beschreibung

Die Erfindung betrifft Mercaptosilan-Ruß-Abmischung, Verfahren zu deren Herstellung, sowie deren Verwendung.

Aus EP 1285926 und EP 1683801 sind Mercaptosilane mit Polyethergruppen bekannt.

Aus EP 1367059 sind Gemische von Mercaptosilanen mit langkettigen Alkoxygruppen bekannt.

Ferner sind aus KR 850000081 Silan-/Füllstoffabmischungen bekannt.

Nachteil der bekannten Mercaptosilan-/Füllstoffabmischungen ist die schlechte Lagerstabilität.

Aufgabe der vorliegenden Erfindung ist es, Abmischungen von Mercaptosilanen mit Ruß zur Verfügung zu stellen, die eine verbesserte Lagerstabilität aufweisen.

Gegenstand der Erfindung ist eine Mercaptosilan-Ruß-Abmischung, enthaltend mindestens 20 Gew.-%, vorzugsweise mindestens 25 Gew.-%, besonders bevorzugt mindestens 30 Gew.-%, Mercaptosilan der allgemeinen Formel I 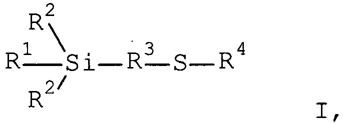 bezogen auf die Mercaptosilan-Ruß-Abmischung,
wobei R¹ eine Alkylpolyethergruppe -O-(R⁵-O)ₘ-R⁶ ist, mit R⁵ gleich oder verschieden, eine verzweigte oder unverzweigte, gesättigte oder ungesättigte, aliphatische zweibindige C1-C30 Kohlenwasserstoffgruppe, vorzugsweise CH₂-CH₂, CH₂-CH(CH₃), -CH(CH₃)-CH₂- oder CH₂-CH₂-CH₂, m im Mittel 1 bis 30, bevorzugt 2 bis 20, besonders bevorzugt 2 bis 15, ganz besonders bevorzugt 3 bis 10, außerordentlich bevorzugt 3,5 bis 7,9, ist, und R⁶ aus mindestens 1, vorzugsweise mindestens 11, besonders bevorzugt mindestens 12, C-Atomen besteht und eine unsubstituierte oder substituierte, verzweigte oder unverzweigte einbindige Alkyl-, Alkenyl, Aryl oder Aralkylgruppe ist,
R² gleich oder verschieden und eine R¹-, C1-C12-Alkyl- oder R⁷O-Gruppe ist, mit R⁷ gleich H, Methyl, Ethyl, Propyl, C9-C30 verzweigten oder unverzweigten einbindigen Alkyl-, Alkenyl-, Aryl-, Aralkylgruppe oder (R⁸)₃Si-Gruppe, mit R⁸ gleich C1-C30 verzweigte oder unverzweigte Alkyl- oder Alkenyl-Gruppe,
R³ eine verzweigte oder unverzweigte, gesättigte oder ungesättigte, aliphatische, aromatische oder gemischt aliphatische /aromatische zweibindige C1-C30, vorzugsweise C1-C6, besonders bevorzugt C3, Kohlenwasserstoffgruppe und
R⁴ gleich H, CN oder (C=O)-R⁹ ist, mit R⁹ gleich einer verzweigten oder unverzweigten, gesättigten oder ungesättigten, aliphatischen, aromatischen oder gemischt aliphatischen /aromatischen einbindigen C1-C30, bevorzugt C5 bis C30, besonders bevorzugt C5 bis C20, ganz besonders bevorzugt C7 bis C15, außerordentlich bevorzugt C7 bis C11, Kohlenwasserstoffgruppe,
   und Ruß,
   welche dadurch gekennzeichnet ist, dass die Mercaptosilan-Ruß-Abmischung einen Eisengehalt < 9 ppm, ganz besonders bevorzugt von 0,1-6 ppm, aufweist und ein Gemisch von Mercptosilanen der allgemeinen Formel I 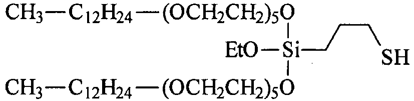 und/oder 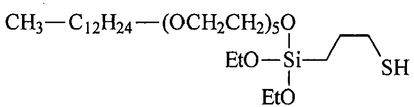 und/oder Hydrolyse- und/oder Kondensationsprodukte der vorgenannten Verbindungen enthält.

Der Ruß in der Mercaptosilan-Ruß-Abmischung kann einen Siebrückstand ≤ 50 ppm, vorzugsweise < 40 ppm, besonders bevorzugt < 35 ppm, aufweisen.

Die Mercaptosilane der allgemeinen Formel I können Verbindungen sein, wobei R¹ eine Alkylpolyethergruppe -O-(R⁵-O)ₘ-R⁶ ist, mit R⁵ gleich oder verschieden, eine verzweigte oder unverzweigte, gesättigte oder ungesättigte, aliphatische zweibindige C1-C30 Kohlenwasserstoffgruppe, m im Mittel 1 bis 30 ist, und R⁶ aus mindestens 11 C-Atomen besteht und eine unsubstituierte oder substituierte, verzweigte oder unverzweigte einbindige Alkyl-, Alkenyl, Aryl oder Aralkylgruppe ist,
R² gleich und eine C1-C12-Alkyl- oder R⁷O-Gruppe ist, mit R⁷ gleich H, Ethyl, Propyl, C9-C30 verzweigten oder unverzweigten einbindigen Alkyl-, Alkenyl-, Aryl-, Aralkylgruppe oder (R⁸)₃Si-Gruppe, mit R⁸ gleich C1-C30 verzweigte oder unverzweigte Alkyl- oder Alkenyl-Gruppe, R³ eine verzweigte oder unverzweigte, gesättigte oder ungesättigte, aliphatische, aromatische oder gemischt aliphatische /aromatische zweibindige C1-C30 Kohlenwasserstoffgruppe und
R⁴ gleich H, CN oder (C=O)-R⁹ ist, mit R⁹ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe.

Die Mercaptosilane der allgemeinen Formel I können Verbindungen sein, wobei R¹ gleich -O-(C₂H₄-O)₅-C₁₁H₂₃, -O-(C₂H₄-O)₅-C₁₂H₂₅, -O-(C₂H₄-O)₅-C₁₃H₂₇, -O-(C₂H₄-O)₅-C₁₄H₂₉, -O-(C₂H₄-O)₅-C₁₅H₃₁, -O-(C₂H₄-O)₃-C₁₃H₂₇, -O-(C₂H₄-O)₄-C₁₃H₂₇, -O-(C₂H₄-O)₆-C₁₃H₂₇, -O-(C₂H₄-O)₇-C₁₃H₂₇, -O-(CH₂CH₂-O)₅-(CH₂)₁₀CH₃, -O-(CH₂CH₂-O)₅-(CH₂)₁₁CH₃, -O-(CH₂CH₂-O)₅-(CH₂)₁₂CH₃, -O-(CH₂CH₂-O)₅-(CH₂)₁₃CH₃, -O-(CH₂CH₂-O)₅-(CH₂)₁₄CH₃, -O-(CH₂CH₂-O)₃-(CH₂)₁₂CH₃, -O-(CH₂CH₂-O)₄-(CH₂)₁₂CH₃, -O-(CH₂CH₂-O)₆-(CH₂)₁₂CH₃, -O-(CH₂CH₂-O)₇-(CH₂)₁₂CH₃, 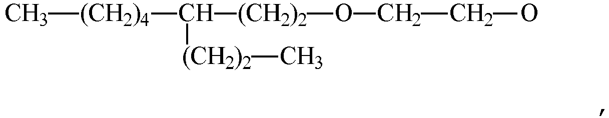 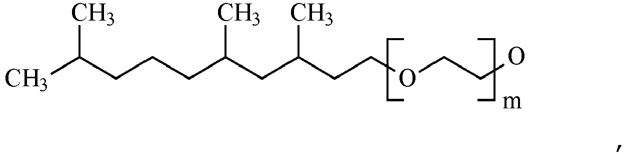 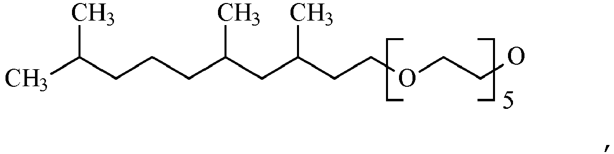 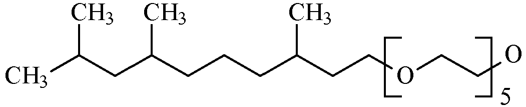 oder 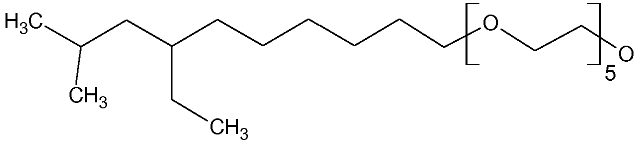 ist,
R² verschieden und eine R¹-, C1-C12-Alkyl- oder R⁷O-Gruppe ist, mit R⁷ gleich H, Methyl, Ethyl, Propyl, C9-C30 verzweigten oder unverzweigten einbindigen Alkyl-, Alkenyl-, Aryl-, Aralkylgruppe oder (R⁸)₃Si-Gruppe, mit R⁸ gleich C1-C30 verzweigte oder unverzweigte Alkyl- oder Alkenyl-Gruppe,
R³ eine verzweigte oder unverzweigte, gesättigte oder ungesättigte, aliphatische, aromatische oder gemischt aliphatische /aromatische zweibindige C1-C30 Kohlenwasserstoffgruppe und
R⁴ gleich H, CN oder (C=O)-R⁹ ist, mit R⁹ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe.

Die Mercaptosilane der allgemeinen Formel I können Verbindungen sein, wobei R¹ gleich -O-(C₂H₄-O)₅-C₁₁H₂₃, -O-(C₂H₄-O)₅-C₁₂H₂₅, -O-(C₂H₄-O)₅-C₁₃H₂₇, -O-(C₂H₄-O)₅-C₁₄H₂₉, -O-(C₂H₄-O)₅-C₁₅H₃₁, -O-(C₂H₄-O)₃-C₁₃H₂₇, -O-(C₂H₄-O)₄-C₁₃H₂₇, -O-(C₂H₄-O)₆-C₁₃H₂₇, -O-(C₂H₄-O)₇-C₁₃H₂₇, -O-(CH₂CH₂-O)₅-(CH₂)₁₀CH₃, -O-(CH₂CH₂-O)₅-(CH₂)₁₁CH₃, -O-(CH₂CH₂-O)₅-(CH₂)₁₂CH₃, -O-(CH₂CH₂-O)₅-(CH₂)₁₃CH₃, -O-(CH₂CH₂-O)₅-(CH₂)₁₄CH₃, -O-(CH₂CH₂-O)₃-(CH₂)₁₂CH₃, -O-(CH₂CH₂-O)₄-(CH₂)₁₂CH₃, -O-(CH₂CH₂-O)₆-(CH₂)₁₂CH₃, -O-(CH₂CH₂-O)₇-(CH₂)₁₂CH₃, 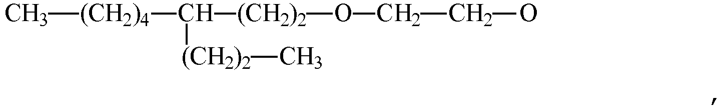 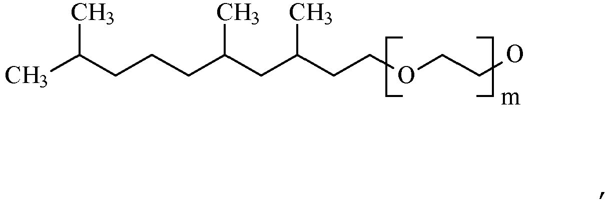 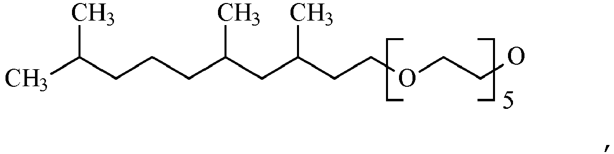 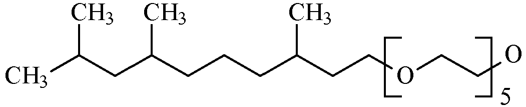 oder 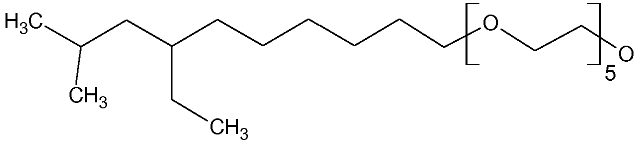 ist,
R² gleich R¹ -Gruppe ist,
R³ eine verzweigte oder unverzweigte, gesättigte oder ungesättigte, aliphatische, aromatische oder gemischt aliphatische /aromatische zweibindige C1-C30 Kohlenwasserstoffgruppe und
R⁴ gleich H, CN oder (C=O)-R⁹ ist, mit R⁹ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe.

Bevorzugte Verbindungen der Formel I mit R⁴ = H können sein:
[(C₁₁H₂₃O-(CH₂-CH₂O)₂](EtO)₂Si(CH₂)₃SH,
[(C₁₁H₂₃O-(CH₂-CH₂O)₃](EtO)₂Si(CH₂)₃SH,
[(C₁₁H₂₃O-(CH₂-CH₂O)₄](EtO)₂Si(CH₂)₃SH,
[(C₁₁H₂₃O-(CH₂-CH₂O)₅](EtO)₂Si(CH₂)₃SH,
[(C₁₁H₂₃O-(CH₂-CH₂O)₆](EtO)₂Si(CH₂)₃SH,
[(C₁₂H₂₅O-(CH₂-CH₂O)₂](EtO)₂Si(CH₂)₃SH,
[(C₁₂H₂₅O-(CH₂-CH₂O)₃](EtO)₂Si(CH₂)₃SH,
[(C₁₂H₂₅O-(CH₂-CH₂O)₄](EtO)₂Si(CH₂)₃SH,
[(C₁₂H₂₅O-(CH₂-CH₂O)₅](EtO)₂Si(CH₂)₃SH,
[(C₁₂H₂₅O-(CH₂-CH₂O)₆](EtO)₂Si(CH₂)₃SH,
[(C₁₃H₂₇O-(CH₂-CH₂O)₂](EtO)₂Si(CH₂)₃SH,
[(C₁₃H₂₇O-(CH₂-CH₂O)₃](EtO)₂Si(CH₂)₃SH,
[(C₁₃H₂₇O-(CH₂-CH₂O)₄](EtO)₂Si(CH₂)₃SH,
[(C₁₃H₂₇O-(CH₂-CH₂O)₅](EtO)₂Si(CH₂)₃SH,
[(C₁₃H₂₇O-(CH₂-CH₂O)₆](EtO)₂Si(CH₂)₃SH,
[(C₁₄H₂₉O-(CH₂-CH₂O)₂](EtO)₂Si(CH₂)₃SH,
[(C₁₄H₂₉O-(CH₂-CH₂O)₃](EtO)₂Si(CH₂)₃SH,
[(C₁₄H₂₉O-(CH₂-CH₂O)₄](EtO)₂Si(CH₂)₃SH,
[(C₁₄H₂₉O-(CH₂-CH₂O)₅](EtO)₂Si(CH₂)₃SH,
[(C₁₄H₂₉O-(CH₂-CH₂O)₆](EtO)₂Si(CH₂)₃SH,
[(C₁₅H₃₁O-(CH₂-CH₂O)₂](EtO)₂Si(CH₂)₃SH,
[(C₁₅H₃₁O-(CH₂-CH₂O)₃](EtO)₂Si(CH₂)₃SH,
[(C₁₅H₃₁O-(CH₂-CH₂O)₄](EtO)₂Si(CH₂)₃SH,
[(C₁₅H₃₁O-(CH₂-CH₂O)₅](EtO)₂Si(CH₂)₃SH,
[(C₁₅H₃₁O-(CH₂-CH₂O)₆](EtO)₂Si(CH₂)₃SH,
[(C₁₆H₃₃O-(CH₂-CH₂O)₂](EtO)₂Si(CH₂)₃SH,
[(C₁₆H₃₃O-(CH₂-CH₂O)₃](EtO)₂Si(CH₂)₃SH,
[(C₁₆H₃₃O-(CH₂-CH₂O)₄](EtO)₂Si(CH₂)₃SH,
[(C₁₆H₃₃O-(CH₂-CH₂O)₅](EtO)₂Si(CH₂)₃SH,
[(C₁₆H₃₃O-(CH₂-CH₂O)₆](EtO)₂Si(CH₂)₃SH,
[(C₁₇H₃₅O-(CH₂-CH₂O)₂](EtO)₂Si(CH₂)₃SH,
[(C₁₇H₃₅O-(CH₂-CH₂O)₃](EtO)₂Si(CH₂)₃SH,
[(C₁₇H₃₅O-(CH₂-CH₂O)₄](EtO)₂Si(CH₂)₃SH,
[(C₁₇H₃₅O-(CH₂-CH₂O)₅](EtO)₂Si(CH₂)₃SH,
[(C₁₇H₃₅O-(CH₂-CH₂O)₆](EtO)₂Si(CH₂)₃SH,
[(C₁₁H₂₃O-(CH₂-CH₂O)₂]₂(EtO)Si(CH₂)₃SH,
[(C₁₁H₂₃O-(CH₂-CH₂O)₃]₂(EtO)Si(CH₂)₃SH,
[(C₁₁H₂₃O-(CH₂-CH₂O)₄]₂(EtO)Si(CH₂)₃SH,
[(C₁₁H₂₃O-(CH₂-CH₂O)₅]₂(EtO)Si(CH₂)₃SH,
[(C₁₁H₂₃O-(CH₂-CH₂O)₆]₂(EtO)Si(CH₂)₃SH,
[(C₁₂H₂₅O-(CH₂-CH₂O)₂]₂(EtO)Si(CH₂)₃SH,
[(C₁₂H₂₅O-(CH₂-CH₂O)₃]₂(EtO)Si(CH₂)₃SH,
[(C₁₂H₂₅O-(CH₂-CH₂O)₄]₂(EtO)Si(CH₂)₃SH,
[(C₁₂H₂₅O-(CH₂-CH₂O)₅]₂(EtO)Si(CH₂)₃SH,
[(C₁₂H₂₅O-(CH₂-CH₂O)₆]₂(EtO)Si(CH₂)₃SH,
[(C₁₃H₂₇O-(CH₂-CH₂O)₂]₂(EtO)Si(CH₂)₃SH,
[(C₁₃H₂₇O-(CH₂-CH₂O)₃]₂(EtO)Si(CH₂)₃SH,
[(C₁₃H₂₇O-(CH₂-CH₂O)₄]₂(EtO)Si(CH₂)₃SH,
[(C₁₃H₂₇O-(CH₂-CH₂O)₅]₂(EtO)Si(CH₂)₃SH,
[(C₁₃H₂₇O-(CH₂-CH₂O)₆]₂(EtO)Si(CH₂)₃SH,
[(C₁₄H₂₉O-(CH₂-CH₂O)₂]₂(EtO)Si(CH₂)₃SH,
[(C₁₄H₂₉O-(CH₂-CH₂O)₃]₂(EtO)Si(CH₂)₃SH,
[(C₁₄H₂₉O-(CH₂-CH₂O)₄]₂(EtO)Si(CH₂)₃SH,
[(C₁₄H₂₉O-(CH₂-CH₂O)₅]₂(EtO)Si(CH₂)₃SH,
[(C₁₄H₂₉O-(CH₂-CH₂O)₆]₂(EtO)Si(CH₂)₃SH,
[(C₁₅H₃₁O-(CH₂-CH₂O)₂]₂(EtO)Si(CH₂)₃SH,
[(C₁₅H₃₁O-(CH₂-CH₂O)₃]₂(EtO)Si(CH₂)₃SH,
[(C₁₅H₃₁O-(CH₂-CH₂O)₄]₂(EtO)Si(CH₂)₃SH,
[(C₁₅H₃₁O-(CH₂-CH₂O)₅]₂(EtO)Si(CH₂)₃SH,
[(C₁₅H₃₁O-(CH₂-CH₂O)₆]₂(EtO)Si(CH₂)₃SH,
[(C₁₆H₃₃O-(CH₂-CH₂O)₂]₂(EtO)Si(CH₂)₃SH,
[(C₁₆H₃₃O-(CH₂-CH₂O)₃]₂(EtO)Si(CH₂)₃SH,
[(C₁₆H₃₃O-(CH₂-CH₂O)₄]₂(EtO)Si(CH₂)₃SH,
[(C₁₆H₃₃O-(CH₂-CH₂O)₅]₂(EtO)Si(CH₂)₃SH,
[(C₁₆H₃₃O-(CH₂-CH₂O)₆]₂(EtO)Si(CH₂)₃SH,
[(C₁₇H₃₅O-(CH₂-CH₂O)₂]₂(EtO)Si(CH₂)₃SH,
[(C₁₇H₃₅O-(CH₂-CH₂O)₃]₂(EtO)Si(CH₂)₃SH,
[(C₁₇H₃₅O-(CH₂-CH₂O)₄]₂(EtO)Si(CH₂)₃SH,
[(C₁₇H₃₅O-(CH₂-CH₂O)₅]₂(EtO)Si(CH₂)₃SH,
[(C₁₇H₃₅O-(CH₂-CH₂O)₆]₂(EtO)Si(CH₂)₃SH,
[(C₁₁H₂₃O-(CH₂-CH₂O)₂]₃Si(CH₂)₃SH,
[(C₁₁H₂₃O-(CH₂-CH₂O)₃]₃Si(CH₂)₃SH,
[(C₁₁H₂₃O-(CH₂-CH₂O)₄]₃Si(CH₂)₃SH,
[(C₁₁H₂₃O-(CH₂-CH₂O)₅]₃Si(CH₂)₃SH,
[(C₁₁H₂₃O-(CH₂-CH₂O)₆]₃Si(CH₂)₃SH,
[(C₁₂H₂₅O-(CH₂-CH₂O)₂]₃Si(CH₂)₃SH,
[(C₁₂H₂₅O-(CH₂-CH₂O)₃]₃Si(CH₂)₃SH,
[(C₁₂H₂₅O-(CH₂-CH₂O)₄]₃Si(CH₂)₃SH,
[(C₁₂H₂₅O-(CH₂-CH₂O)₅]₃Si(CH₂)₃SH,
[(C₁₂H₂₅O-(CH₂-CH₂O)₆]₃Si(CH₂)₃SH,
[(C₁₃H₂₇O-(CH₂-CH₂O)₂]₃Si(CH₂)₃SH,
[(C₁₃H₂₇O-(CH₂-CH₂O)₃]₃Si(CH₂)₃SH,
[(C₁₃H₂₇O-(CH₂-CH₂O)₄]₃Si(CH₂)₃SH,
[(C₁₃H₂₇O-(CH₂-CH₂O)₅]₃Si(CH₂)₃SH,
[(C₁₃H₂₇O-(CH₂-CH₂O)₆]₃Si(CH₂)₃SH,
[(C₁₄H₂₉O-(CH₂-CH₂O)₂]₃Si(CH₂)₃SH,
[(C₁₄H₂₉O-(CH₂-CH₂O)₃]₃Si(CH₂)₃SH,
[(C₁₄H₂₉O-(CH₂-CH₂O)₄]₃Si(CH₂)₃SH,
[(C₁₄H₂₉O-(CH₂-CH₂O)₅]₃Si(CH₂)₃SH,
[(C₁₄H₂₉O-(CH₂-CH₂O)₆]₃Si(CH₂)₃SH,
[(C₁₅H₃₁O-(CH₂-CH₂O)₂]₃Si(CH₂)₃SH,
[(C₁₅H₃₁-(CH₂-CH₂O)₃]₃Si(CH₂)₃SH,
[(C₁₅H₃₁O-(CH₂-CH₂O)₄]₃Si(CH₂)₃SH,
[(C₁₅H₃₁O-(CH₂-CH₂O)₅]₃Si(CH₂)₃SH,
[(C₁₅H₃₁O-(CH₂-CH₂O)₆]₃Si(CH₂)₃SH,
[(C₁₆H₃₃O-(CH₂-CH₂O)₂]₃Si(CH₂)₃SH,
[(C₁₆H₃₃-(CH₂-CH₂O)₃]₃Si(CH₂)₃SH,
[(C₁₆H₃₃O-(CH₂-CH₂O)₄]₃Si(CH₂)₃SH,
[(C₁₆H₃₃O-(CH₂-CH₂O)₅]₃Si(CH₂)₃SH,
[(C₁₆H₃₃O-(CH₂-CH₂O)₆]₃Si(CH₂)₃SH,
[(C₁₇H₃₅O-(CH₂-CH₂O)₂]₃Si(CH₂)₃SH,
[(C₁₇H₃₅-(CH₂-CH₂O)₃]₃Si(CH₂)₃SH,
[(C₁₇H₃₅O-(CH₂-CH₂O)₄]₃Si(CH₂)₃SH,
[(C₁₇H₃₅O-(CH₂-CH₂O)₅]₃Si(CH₂)₃SH,
[(C₁₇H₃₅O-(CH₂-CH₂O)₆]₃Si(CH₂)₃SH,
[(C₁₁H₂₃O-(CH₂-CH₂O)₂](EtO)₂Si-CH₂-CH(CH₃)-CH₂-SH,
[(C₁₁H₂₃O-(CH₂-CH₂O)₃](EtO)₂Si-CH₂-CH(CH₃)-CH₂-SH,
[(C₁₁H₂₃O-(CH₂-CH₂O)₄](EtO)₂Si-CH₂-CH(CH₃)-CH₂-SH,
[(C₁₁H₂₃O-(CH₂-CH₂O)₅](EtO)₂Si-CH₂-CH(CH₃)-CH₂-SH,
[(C₁₁H₂₃O-(CH₂-CH₂O)₆](EtO)₂Si-CH₂-CH(CH₃)-CH₂-SH,
[(C₁₂H₂₅O-(CH₂-CH₂O)₂](EtO)₂Si-CH₂-CH(CH₃)-CH₂-SH,
[(C₁₂H₂₅O-(CH₂-CH₂O)₃](EtO)₂Si-CH₂-CH(CH₃)-CH₂-SH,
[(C₁₂H₂₅O-(CH₂-CH₂O)₄](EtO)₂Si-CH₂-CH(CH₃)-CH₂-SH,
[(C₁₂H₂₅O-(CH₂-CH₂O)₅](EtO)₂Si-CH₂-CH(CH₃)-CH₂-SH,
[(C₁₂H₂₅O-(CH₂-CH₂O)₆](EtO)₂Si-CH₂-CH(CH₃)-CH₂-SH,
[(C₁₃H₂₇O-(CH₂-CH₂O)₂](EtO)₂Si-CH₂-CH(CH₃)-CH₂-SH,
[(C₁₃H₂₇O-(CH₂-CH₂O)₃](EtO)₂Si-CH₂-CH(CH₃)-CH₂-SH,
[(C₁₃H₂₇O-(CH₂-CH₂O)₄](EtO)₂Si-CH₂-CH(CH₃)-CH₂-SH,
[(C₁₃H₂₇O-(CH₂-CH₂O)₅](EtO)₂Si-CH₂-CH(CH₃)-CH₂-SH,
[(C₁₃H₂₇O-(CH₂-CH₂O)₆](EtO)₂Si-CH₂-CH(CH₃)-CH₂-SH,
[(C₁₄H₂₉O-(CH₂-CH₂O)₂](EtO)₂Si-CH₂-CH(CH₃)-CH₂-SH,
[(C₁₄H₂₉O-(CH₂-CH₂O)₃](EtO)₂Si-CH₂-CH(CH₃)-CH₂-SH,
[(C₁₄H₂₉O-(CH₂-CH₂O)₄](EtO)₂Si-CH₂-CH(CH₃)-CH₂-SH,
[(C₁₄H₂₉O-(CH₂-CH₂O)₅](EtO)₂Si-CH₂-CH(CH₃)-CH₂-SH,
[(C₁₄H₂₉O-(CH₂-CH₂O)₆](EtO)₂Si-CH₂-CH(CH₃)-CH₂-SH,
[(C₁₅H₃₁O-(CH₂-CH₂O)₂](EtO)₂Si-CH₂-CH(CH₃)-CH₂-SH,
[(C₁₅H₃₁O-(CH₂-CH₂O)₃](EtO)₂Si-CH₂-CH(CH₃)-CH₂-SH,
[(C₁₅H₃₁O-(CH₂-CH₂O)₄](EtO)₂Si-CH₂-CH(CH₃)-CH₂-SH,
[(C₁₅H₃₁O-(CH₂-CH₂O)₅](EtO)₂Si-CH₂-CH(CH₃)-CH₂-SH,
[(C₁₅H₃₁O-(CH₂-CH₂O)₆](EtO)₂Si-CH₂-CH(CH₃)-CH₂-SH,
[(C₁₆H₃₃O-(CH₂-CH₂O)₂](EtO)₂Si-CH₂-CH(CH₃)-CH₂-SH,
[(C₁₆H₃₃O-(CH₂-CH₂O)₃](EtO)₂Si-CH₂-CH(CH₃)-CH₂-SH,
[(C₁₆H₃₃O-(CH₂-CH₂O)₄](EtO)₂Si-CH₂-CH(CH₃)-CH₂-SH,
[(C₁₆H₃₃O-(CH₂-CH₂O)₅](EtO)₂Si-CH₂-CH(CH₃)-CH₂-SH,
[(C₁₆H₃₃O-(CH₂-CH₂O)₆](EtO)₂Si-CH₂-CH(CH₃)-CH₂-SH,
[(C₁₇H₃₅O-(CH₂-CH₂O)₂](EtO)₂Si-CH₂-CH(CH₃)-CH₂-SH,
[(C₁₇H₃₅O-(CH₂-CH₂O)₃](EtO)₂Si-CH₂-CH(CH₃)-CH₂-SH,
[(C₁₇H₃₅O-(CH₂-CH₂O)₄](EtO)₂Si-CH₂-CH(CH₃)-CH₂-SH,
[(C₁₇H₃₅O-(CH₂-CH₂O)₅](EtO)₂Si-CH₂-CH(CH₃)-CH₂-SH,
[(C₁₇H₃₅O-(CH₂-CH₂O)₆](EtO)₂Si-CH₂-CH(CH₃)-CH₂-SH,
[(C₁₁H₂₃O-(CH₂-CH₂O)₂]₂(EtO)Si-CH₂-CH(CH₃)-CH₂-SH,
[(C₁₁H₂₃O-(CH₂-CH₂O)₃]₂(EtO)Si-CH₂-CH(CH₃)-CH₂-SH,
[(C₁₁H₂₃O-(CH₂-CH₂O)₄]₂(EtO)Si-CH₂-CH(CH₃)-CH₂-SH,
[(C₁₁H₂₃O-(CH₂-CH₂O)₅]₂(EtO)Si-CH₂-CH(CH₃)-CH₂-SH,
[(C₁₁H₂₃O-(CH₂-CH₂O)₆]₂(EtO)Si-CH₂-CH(CH₃)-CH₂-SH,
[(C₁₂H₂₅O-(CH₂-CH₂O)₂]₂(EtO)Si-CH₂-CH(CH₃)-CH₂-SH,
[(C₁₂H₂₅O-(CH₂-CH₂O)₃]₂(EtO)Si-CH₂-CH(CH₃)-CH₂-SH,
[(C₁₂H₂₅O-(CH₂-CH₂O)₄]₂(EtO)Si-CH₂-CH(CH₃)-CH₂-SH,
[(C₁₂H₂₅O-(CH₂-CH₂O)₅]₂(EtO)Si-CH₂-CH(CH₃)-CH₂-SH,
[(C₁₂H₂₅O-(CH₂-CH₂O)₆]₂(EtO)Si-CH₂-CH(CH₃)-CH₂-SH,
[(C₁₃H₂₇O-(CH₂-CH₂O)₂]₂(EtO)Si-CH₂-CH(CH₃)-CH₂-SH,
[(C₁₃H₂₇O-(CH₂-CH₂O)₃]₂(EtO)Si-CH₂-CH(CH₃)-CH₂-SH,
[(C₁₃H₂₇O-(CH₂-CH₂O)₄]₂(EtO)Si-CH₂-CH(CH₃)-CH₂-SH,
[(C₁₃H₂₇O-(CH₂-CH₂O)₅]₂(EtO)Si-CH₂-CH(CH₃)-CH₂-SH,
[(C₁₃H₂₇O-(CH₂-CH₂O)₆]₂(EtO)Si-CH₂-CH(CH₃)-CH₂-SH,
[(C₁₄H₂₉O-(CH₂-CH₂O)₂]₂(EtO)Si-CH₂-CH(CH₃)-CH₂-SH,
[(C₁₄H₂₉O-(CH₂-CH₂O)₃]₂(EtO)Si-CH₂-CH(CH₃)-CH₂-SH,
[(C₁₄H₂₉O-(CH₂-CH₂O)₄]₂(EtO)Si-CH₂-CH(CH₃)-CH₂-SH,
[(C₁₄H₂₉O-(CH₂-CH₂O)₅]₂(EtO)Si-CH₂-CH(CH₃)-CH₂-SH,
[(C₁₄H₂₉O-(CH₂-CH₂O)₆]₂(EtO)Si-CH₂-CH(CH₃)-CH₂-SH,
[(C₁₅H₃₁O-(CH₂-CH₂O)₂]₂(EtO)Si-CH₂-CH(CH₃)-CH₂-SH,
[(C₁₅H₃₁O-(CH₂-CH₂O)₃]₂(EtO)Si-CH₂-CH(CH₃)-CH₂-SH,
[(C₁₅H₃₁O-(CH₂-CH₂O)₄]₂(EtO)Si-CH₂-CH(CH₃)-CH₂-SH,
[(C₁₅H₃₁O-(CH₂-CH₂O)₅]₂(EtO)Si-CH₂-CH(CH₃)-CH₂-SH,
[(C₁₅H₃₁O-(CH₂-CH₂O)₆]₂(EtO)Si-CH₂-CH(CH₃)-CH₂-SH,
[(C₁₆H₃₃O-(CH₂-CH₂O)₂]₂(EtO)Si-CH₂-CH(CH₃)-CH₂-SH,
[(C₁₆H₃₃O-(CH₂-CH₂O)₃]₂(EtO)Si-CH₂-CH(CH₃)-CH₂-SH,
[(C₁₆H₃₃O-(CH₂-CH₂O)₄]₂(EtO)Si-CH₂-CH(CH₃)-CH₂-SH,
[(C₁₆H₃₃O-(CH₂-CH₂O)₅]₂(EtO)Si-CH₂-CH(CH₃)-CH₂-SH,
[(C₁₆H₃₃O-(CH₂-CH₂O)₆]₂(EtO)Si-CH₂-CH(CH₃)-CH₂-SH,
[(C₁₇H₃₅O-(CH₂-CH₂O)₂]₂(EtO)Si-CH₂-CH(CH₃)-CH₂-SH,
[(C₁₇H₃₅O-(CH₂-CH₂O)₃]₂(EtO)Si-CH₂-CH(CH₃)-CH₂-SH,
[(C₁₇H₃₅O-(CH₂-CH₂O)₄]₂(EtO)Si-CH₂-CH(CH₃)-CH₂-SH,
[(C₁₇H₃₅O-(CH₂-CH₂O)₅]₂(EtO)Si-CH₂-CH(CH₃)-CH₂-SH,
[(C₁₇H₃₅O-(CH₂-CH₂O)₆]₂(EtO)Si-CH₂-CH(CH₃)-CH₂-SH,
[(C₁₁H₂₃O-(CH₂-CH₂O)₂]₃Si-CH₂-CH(CH₃)-CH₂-SH,
[(C₁₁H₂₃O-(CH₂-CH₂O)₃]₃Si-CH₂-CH(CH₃)-CH₂-SH,
[(C₁₁H₂₃O-(CH₂-CH₂O)₄]₃Si-CH₂-CH(CH₃)-CH₂-SH,
[(C₁₁H₂₃O-(CH₂-CH₂O)₅]₃Si-CH₂-CH(CH₃)-CH₂-SH,
[(C₁₁H₂₃O-(CH₂-CH₂O)₆]₃Si-CH₂-CH(CH₃)-CH₂-SH,
[(C₁₂H₂₅O-(CH₂-CH₂O)₂]₃Si-CH₂-CH(CH₃)-CH₂-SH,
[(C₁₂H₂₅O-(CH₂-CH₂O)₃]₃Si-CH₂-CH(CH₃)-CH₂-SH,
[(C₁₂H₂₅O-(CH₂-CH₂O)₄]₃Si-CH₂-CH(CH₃)-CH₂-SH,
[(C₁₂H₂₅O-(CH₂-CH₂O)₅]₃Si-CH₂-CH(CH₃)-CH₂-SH,
[(C₁₂H₂₅O-(CH₂-CH₂O)₆]₃Si-CH₂-CH(CH₃)-CH₂-SH,
[(C₁₃H₂₇O-(CH₂-CH₂O)₂]₃Si-CH₂-CH(CH₃)-CH₂-SH,
[(C₁₃H₂₇O-(CH₂-CH₂O)₃]₃Si-CH₂-CH(CH₃)-CH₂-SH,
[(C₁₃H₂₇O-(CH₂-CH₂O)₄]₃Si-CH₂-CH(CH₃)-CH₂-SH,
[(C₁₃H₂₇O-(CH₂-CH₂O)₅]₃Si-CH₂-CH(CH₃)-CH₂-SH,
[(C₁₃H₂₇O-(CH₂-CH₂O)₆]₃Si-CH₂-CH(CH₃)-CH₂-SH,
[(C₁₄H₂₉O-(CH₂-CH₂O)₂]₃Si-CH₂-CH(CH₃)-CH₂-SH,
[(C₁₄H₂₉O-(CH₂-CH₂O)₃]₃Si-CH₂-CH(CH₃)-CH₂-SH,
[(C₁₄H₂₉O-(CH₂-CH₂O)₄]₃Si-CH₂-CH(CH₃)-CH₂-SH,
[(C₁₄H₂₉O-(CH₂-CH₂O)₅]₃Si-CH₂-CH(CH₃)-CH₂-SH,
[(C₁₄H₂₉O-(CH₂-CH₂O)₆]₃Si-CH₂-CH(CH₃)-CH₂-SH.
[(C₁₅H₃₁O-(CH₂-CH₂O)₂]₃Si-CH₂-CH(CH₃)-CH₂-SH,
[(C₁₅H₃₁O-(CH₂-CH₂O)₃]₃Si-CH₂-CH(CH₃)-CH₂-SH,
[(C₁₅H₃₁O-(CH₂-CH₂O)₄]₃Si-CH₂-CH(CH₃)-CH₂-SH,
[(C₁₅H₃₁O-(CH₂-CH₂O)₅]₃Si-CH₂-CH(CH₃)-CH₂-SH,
[(C₁₅H₃₁O-(CH₂-CH₂O)₆]₃Si-CH₂-CH(CH₃)-CH₂-SH,
[(C₁₆H₃₃O-(CH₂-CH₂O)₂]₃Si-CH₂-CH(CH₃)-CH₂-SH,
[(C₁₆H₃₃O-(CH₂-CH₂O)₃]₃Si-CH₂-CH(CH₃)-CH₂-SH,
[(C₁₆H₃₃O-(CH₂-CH₂O)₄]₃Si-CH₂-CH(CH₃)-CH₂-SH,
[(C₁₆H₃₃O-(CH₂-CH₂O)₅]₃Si-CH₂-CH(CH₃)-CH₂-SH,
[(C₁₆H₃₃O-(CH₂-CH₂O)₆]₃Si-CH₂-CH(CH₃)-CH₂-SH,
[(C₁₇H₃₅O-(CH₂-CH₂O)₂]₃Si-CH₂-CH(CH₃)-CH₂-SH,
[(C₁₇H₃₅O-(CH₂-CH₂O)₃]₃Si-CH₂-CH(CH₃)-CH₂-SH,
[(C₁₇H₃₅O-(CH₂-CH₂O)₄]₃Si-CH₂-CH(CH₃)-CH₂-SH,
[(C₁₇H₃₅O-(CH₂-CH₂O)₅]₃Si-CH₂-CH(CH₃)-CH₂-SH oder
[(C₁₇H₃₅O-(CH₂-CH₂O)₆]₃Si-CH₂-CH(CH₃)-CH₂-SH, wobei R⁶ verzweigt oder unverzweigt sein kann.

Bevorzugte Verbindungen der Formel I mit R⁴ = CN können sein:
[(C₁₁H₂₃O-(CH₂-CH₂O)₂](EtO)₂Si(CH₂)₃SCN,
[(C₁₁H₂₃O-(CH₂-CH₂O)₃](EtO)₂Si(CH₂)₃SCN,
[(C₁₁H₂₃O-(CH₂-CH₂O)₄](EtO)₂Si(CH₂)₃SCN,
[(C₁₁H₂₃O-(CH₂-CH₂O)₅](EtO)₂Si(CH₂)₃SCN,
[(C₁₁H₂₃O-(CH₂-CH₂O)₆](EtO)₂Si(CH₂)₃SCN,
[(C₁₂H₂₅O-(CH₂-CH₂O)₂](EtO)₂Si(CH₂)₃SCN,
[(C₁₂H₂₅O-(CH₂-CH₂O)₃](EtO)₂Si(CH₂)₃SCN,
[(C₁₂H₂₅O-(CH₂-CH₂O)₄](EtO)₂Si(CH₂)₃SCN,
[(C₁₂H₂₅O-(CH₂-CH₂O)₅](EtO)₂Si(CH₂)₃SCN,
[(C₁₂H₂₅O-(CH₂-CH₂O)₆](EtO)₂Si(CH₂)₃SCN,
[(C₁₃H₂₇O-(CH₂-CH₂O)₂](EtO)₂Si(CH₂)₃SCN,
[(C₁₃H₂₇O-(CH₂-CH₂O)₃](EtO)₂Si(CH₂)₃SCN,
[(C₁₃H₂₇O-(CH₂-CH₂O)₄](EtO)₂Si(CH₂)₃SCN,
[(C₁₃H₂₇O-(CH₂-CH₂O)₅](EtO)₂Si(CH₂)₃SCN,
[(C₁₃H₂₇O-(CH₂-CH₂O)₆](EtO)₂Si(CH₂)₃SCN,
[(C₁₄H₂₉O-(CH₂-CH₂O)₂](EtO)₂Si(CH₂)₃SCN,
[(C₁₄H₂₉O-(CH₂-CH₂O)₃](EtO)₂Si(CH₂)₃SCN,
[(C₁₄H₂₉O-(CH₂-CH₂O)₄](EtO)₂Si(CH₂)₃SCN,
[(C₁₄H₂₉O-(CH₂-CH₂O)₅](EtO)₂Si(CH₂)₃SCN,
[(C₁₄H₂₉O-(CH₂-CH₂O)₆](EtO)₂Si(CH₂)₃SCN,
[(C₁₁H₂₃O-(CH₂-CH₂O)₂]₂(EtO)Si(CH₂)₃SCN,
[(C₁₁H₂₃O-(CH₂-CH₂O)₃]₂(EtO)Si(CH₂)₃SCN,
[(C₁₁H₂₃O-(CH₂-CH₂O)₄]₂(EtO)Si(CH₂)₃SCN,
[(C₁₁H₂₃O-(CH₂-CH₂O)₅]₂(EtO)Si(CH₂)₃SCN,
[(C₁₁H₂₃O-(CH₂-CH₂O)₆]₂(EtO)Si(CH₂)₃SCN,
[(C₁₂H₂₅O-(CH₂-CH₂O)₂]₂(EtO)Si(CH₂)₃SCN,
[(C₁₂H₂₅O-(CH₂-CH₂O)₃]₂(EtO)Si(CH₂)₃SCN,
[(C₁₂H₂₅O-(CH₂-CH₂O)₄]₂(EtO)Si(CH₂)₃SCN,
[(C₁₂H₂₅O-(CH₂-CH₂O)₅]₂(EtO)Si(CH₂)₃SCN,
[(C₁₂H₂₅O-(CH₂-CH₂O)₆]₂(EtO)Si(CH₂)₃SCN,
[(C₁₃H₂₇O-(CH₂-CH₂O)₂]₂(EtO)Si(CH₂)₃SCN,
[(C₁₃H₂₇O-(CH₂-CH₂O)₃]₂(EtO)Si(CH₂)₃SCN,
[(C₁₃H₂₇O-(CH₂-CH₂O)₄]₂(EtO)Si(CH₂)₃SCN,
[(C₁₃H₂₇O-(CH₂-CH₂O)₅]₂(EtO)Si(CH₂)₃SCN,
[(C₁₃H₂₇O-(CH₂-CH₂O)₆]₂(EtO)Si(CH₂)₃SCN,
[(C₁₄H₂₉O-(CH₂-CH₂O)₂]₂(EtO)Si(CH₂)₃SCN,
[(C₁₄H₂₉O-(CH₂-CH₂O)₃]₂(EtO)Si(CH₂)₃SCN,
[(C₁₄H₂₉O-(CH₂-CH₂O)₄]₂(EtO)Si(CH₂)₃SCN,
[(C₁₄H₂₉O-(CH₂-CH₂O)₅]₂(EtO)Si(CH₂)₃SCN,
[(C₁₄H₂₉O-(CH₂-CH₂O)₆]₂(EtO)Si(CH₂)₃SCN,
[(C₁₁H₂₃O-(CH₂-CH₂O)₂]₃Si(CH₂)₃SCN,
[(C₁₁H₂₃O-(CH₂-CH₂O)₃]₃Si(CH₂)₃SCN,
[(C₁₁H₂₃O-(CH₂-CH₂O)₄]₃Si(CH₂)₃SCN,
[(C₁₁H₂₃O-(CH₂-CH₂O)₅]₃Si(CH₂)₃SCN,
[(C₁₁H₂₃O-(CH₂-CH₂O)₆]₃Si(CH₂)₃SCN,
[(C₁₂H₂O-(CH₂-CH₂O)₂]₃Si(CH₂)₃SCN,
[(C₁₂H₂₅O-(CH₂-CH₂O)₃]₃Si(CH₂)₃SCN,
[(C₁₂H₂₅O-(CH₂-CH₂O)₄]₃Si(CH₂)₃SCN,
[(C₁₂H₂₅O-(CH₂-CH₂O)₅]₃Si(CH₂)₃SCN,
[(C₁₂H₂₅O-(CH₂-CH₂O)₆]₃Si(CH₂)₃SCN,
[(C₁₃H₂₇O-(CH₂-CH₂O)₂]₃Si(CH₂)₃SCN,
[(C₁₃H₂₇O-(CH₂-CH₂O)₃]₃Si(CH₂)₃SCN,
[(C₁₃H₂₇O-(CH₂-CH₂O)₄]₃Si(CH₂)₃SCN,
[(C₁₃H₂₇O-(CH₂-CH₂O)₅]₃Si(CH₂)₃SCN,
[(C₁₃H₂₇O-(CH₂-CH₂O)₆]₃Si(CH₂)₃SCN,
[(C₁₄H₂₉0- (CH₂-CH₂O)₂]₃Si(CH₂)₃SCN,
[(C₁₄H₂₉O-(CH₂-CH₂O)₃]₃Si(CH₂)₃SCN,
[(C₁₄H₂₉O-(CH₂-CH₂O)₄]₃Si(CH₂)₃SCN,
[(C₁₄H₂₉O-(CH₂-CH₂O)₅]₃Si(CH₂)₃SCN oder
[(C₁₄H₂₉O-(CH₂-CH₂O)₆]₃Si(CH₂)₃SCN, wobei R⁶ verzweigt oder unverzweigt sein kann.

Bevorzugte Verbindungen der Formel I mit R⁴ = -C(=O)-R⁹ und R⁹ = verzweigte oder unverzweigte -C₅H₁₁, -C₆H₁₃, -C₇H₁₅, - C_{B}H₁₇, -C₉H₁₉, -C₁₀H₂₁, -C₁₁H₂₃, -C₁₂H₂₅, -C₁₃H₂₇, -C₁₄H₂₉, -C₁₅H₃2, - C₁₆H₃₃, -C₁₇H₃₅ und -C₆H₅ (Phenyl) können sein:
[(C₁₁H₂₃O-(CH₂-CH₂O)₂](EtO)₂Si(CH₂)₃-C(=O)-R⁹,
[(C₁₁H₂₃O-(CH₂-CH₂O)₃](EtO)₂Si(CH₂)₃-C(=O)-R⁹,
[(C₁₁H₂₃O-(CH₂-CH₂O)₄](EtO)₂Si(CH₂)₃-C(=O)-R⁹,
[(C₁₁H₂₃O-(CH₂-CH₂O)₅](EtO)₂Si(CH₂)₃-C(=O)-R⁹,
[(C₁₁H₂₃O-(CH₂-CH₂O)₆](EtO)₂Si(CH₂)₃-C(=O)-R⁹,
[(C₁₂H₂₅O-(CH₂-CH₂O)₂](EtO)₂Si(CH₂)₃-C(=O)-R⁹,
[(C₁₂H₂₅O-(CH₂-CH₂O)₃](EtO)₂Si(CH₂)₃-C(=O)-R⁹,
[(C₁₂H₂₅O-(CH₂-CH₂O)₄](EtO)₂Si(CH₂)₃-C(=O)-R⁹,
[(C₁₂H₂₅O-(CH₂-CH₂O)₅](EtO)₂Si(CH₂)₃-C(=O)-R⁹,
[(C₁₂H₂₅O-(CH₂-CH₂O)₆](EtO)₂Si(CH₂)₃-C(=O)-R⁹,
[(C₁₃H₂₇O-(CH₂-CH₂O)₂](EtO)₂Si(CH₂)₃-C(=O)-R⁹,
[(C₁₃H₂₇O-(CH₂-CH₂O)₃](EtO)₂Si(CH₂)₃-C(=O)-R⁹,
[(C₁₃H₂₇O-(CH₂-CH₂O)₄](EtO)₂Si(CH₂)₃-C(=O)-R⁹,
[(C₁₃H₂₇O-(CH₂-CH₂O)₅](EtO)₂Si(CH₂)₃-C(=O)-R⁹,
[(C₁₃H₂₇O-(CH₂-CH₂O)₆](EtO)₂Si(CH₂)₃-C(=O)-R⁹,
[(C₁₄H₂₉O-(CH₂-CH₂O)₂](EtO)₂Si(CH₂)₃-C(=O)-R⁹,
[(C₁₄H₂₉O-(CH₂-CH₂O)₃](EtO)₂Si(CH₂)₃-C(=O)-R⁹,
[(C₁₄H₂₉O-(CH₂-CH₂O)₄](EtO)₂Si(CH₂)₃-C(=O)-R⁹,
[(C₁₄H₂₉O-(CH₂-CH₂O)₅](EtO)₂Si(CH₂)₃-C(=O)-R⁹,
[(C₁₄H₂₉O-(CH₂-CH₂O)₆](EtO)₂Si(CH₂)₃-C(=O)-R⁹,
[(C₁₁H₂₃O-(CH₂-CH₂O)₂]₂ (EtO)Si(CH₂)₃-C(=O)-R⁹,
[(C₁₁H₂₃O-(CH₂-CH₂O)₃]₂(EtO)Si(CH₂)₃-C(=O)-R⁹,
[(C₁₁H₂₃O-(CH₂-CH₂O)₄]₂(EtO)Si(CH₂)₃-C(=O)-R⁹,
[(C₁₁H₂₃O-(CH₂-CH₂O)₅]₂(EtO)Si(CH₂)₃-C(=O)-R⁹,
[(C₁₁H₂₃O-(CH₂-CH₂O)₆]₂(EtO)Si(CH₂)₃-C(=O)-R⁹,
[(C₁₂H₂₅O-(CH₂-CH₂O)₂]₂(EtO)Si(CH₂)₃-C(=O)-R⁹,
[(C₁₂H₂₅O-(CH₂-CH₂O)₃]₂(EtO)Si(CH₂)₃-C(=O)-R⁹,
[(C₁₂H₂₅O-(CH₂-CH₂O)₄]₂(EtO)Si(CH₂)₃-C(=O)-R⁹,
[(C₁₂H₂₅O-(CH₂-CH₂O)₅]₂(EtO)Si(CH₂)₃-C(=O)-R⁹,
[(C₁₂H₂₅O-(CH₂-CH₂O)₆]₂(EtO)Si(CH₂)₃-C(=O)-R⁹,
[(C₁₃H₂₇O-(CH₂-CH₂O)₂]₂(EtO)Si(CH₂)₃-C(=O)-R⁹,
[(C₁₃H₂₇O-(CH₂-CH₂O)₃]₂(EtO)Si(CH₂)₃-C(=O)-R⁹,
[(C₁₃H₂₇O-(CH₂-CH₂O)₄]₂(EtO)Si(CH₂)₃-C(=O)-R⁹,
[(C₁₃H₂₇O-(CH₂-CH₂O)₅]₂(EtO)Si(CH₂)₃-C(=O)-R⁹,
[(C₁₃H₂₇O-(CH₂-CH₂O)₆]₂(EtO)Si(CH₂)₃-C(=O)-R⁹,
[(C₁₄H₂₉O-(CH₂-CH₂O)₂]₂(EtO)Si(CH₂)₃-C(=O)-R⁹,
[(C₁₄H₂₉O-(CH₂-CH₂O)₃]₂(EtO)Si(CH₂)₃-C(=O)-R⁹,
[(C₁₄H₂₉O-(CH₂-CH₂O)₄]₂(EtO)Si(CH₂)₃-C(=O)-R⁹,
[(C₁₄H₂₉O-(CH₂-CH₂O)₅]₂(EtO)Si(CH₂)₃-C(=O)-R⁹,
[(C₁₄H₂₉O-(CH₂-CH₂O)₆]₂(EtO)Si(CH₂)₃-C(=O)-R⁹,
[(C₁₁H₂₃O-(CH₂-CH₂O)₂]₃Si(CH₂)₃-C(=O)-R⁹,
[(C₁₁H₂₃O-(CH₂-CH₂O)₃]₃Si(CH₂)₃-C(=O)-R⁹,
[(C₁₁H₂₃O-(CH₂-CH₂O)₄]₃Si(CH₂)₃-C(=O)-R⁹,
[(C₁₁H₂₃O-(CH₂-CH₂O)₅]₃Si(CH₂)₃-C(=O)-R⁹,
[(C₁₁H₂₃O-(CH₂-CH₂O)₆]₃Si(CH₂)₃-C(=O)-R⁹,
[(C₁₂H₂₅O-(CH₂-CH₂O)₂]₃Si(CH₂)₃-C(=O)-R⁹,
[(C₁₂H₂₅O-(CH₂-CH₂O)₃]₃Si(CH₂)₃-C(=O)-R⁹,
[(C₁₂H₂₅O-(CH₂-CH₂O)₄]₃Si(CH₂)₃-C(=O)-R⁹,
[(C₁₂H₂₅O-(CH₂-CH₂O)₅]₃Si(CH₂)₃-C(=O)-R⁹,
[(C₁₂H₂₅O-(CH₂-CH₂O)₆]₃Si(CH₂)₃-C(=O)-R⁹,
[(C₁₃H₂₇O-(CH₂-CH₂O)₂]₃Si(CH₂)₃-C(=O)-R⁹,
[(C₁₃H₂₇O-(CH₂-CH₂O)₃]₃Si(CH₂)₃-C(=O)-R⁹,
[(C₁₃H₂₇O-(CH₂-CH₂O)₄]₃Si(CH₂)₃-C(=O)-R⁹,
[(C₁₃H₂₇O-(CH₂-CH₂O)₅]₃Si(CH₂)₃-C(=O)-R⁹,
[(C₁₃H₂₇O-(CH₂-CH₂O)₆]₃Si(CH₂)₃-C(=O)-R⁹,
[(C₁₄H₂₉O-(CH₂-CH₂O)₂]₃Si(CH₂)₃-C(=O)-R⁹,
[(C₁₄H₂₉O-(CH₂-CH₂O)₃]₃Si(CH₂)₃-C(=O)-R⁹,
[(C₁₄H₂₉O-(CH₂-CH₂O)₄]₃Si(CH₂)₃-C(=O)-R⁹,
[(C₁₄H₂₉O-(CH₂-CH₂O)₅]₃Si(CH₂)₃-C(=O)-R⁹ oder [(C₁₄H₂₉O-(CH₂-CH₂O)₆]₃Si(CH₂)₃-C(=O)-R⁹.

R⁶ kann bevorzugt C₁₂ bis C₁₇, ganz besonders bevorzugt C₁₂ bis C₁₆, außerordentlich bevorzugt C₁₂ bis C₁₄, unsubstituiertes oder substituiertes, verzweigtes oder unverzweigtes einbindiges Alkyl sein.

R⁶ kann eine -C₁₁H₂₃, -C₁₂H₂₅, -C₁₃H₂₇, -C₁₄H₂₉, -C₁₅H₃₁, -C₁₆H₃₃ oder -C₁₇H₃₅ Alkylgruppe sein.

R⁶ kann bevorzugt C₁₁ bis C₃₅, besonders bevorzugt C₁₁ bis C₃₀, ganz besonders bevorzugt C₁₂ bis C₃₀, außerordentlich bevorzugt C₁₃ bis C₂₀, unsubstituiertes oder substituiertes, verzweigtes oder unverzweigtes einbindiges Alkenyl sein.

R⁶ kann bevorzugt C₁₁ bis C₁₄ und/oder C₁₆ bis C₃₀, ganz besonders bevorzugt C₁₁ bis C₁₄ und/oder C₁₆ bis C₂₅, außerordentlich bevorzugt C₁₂ bis C₁₄ und/oder C₁₆ bis C₂₀, unsubstituiertes oder substituiertes, verzweigtes oder unverzweigtes einbindiges Aralkyl sein.

R⁶ kann als Alkenyl C₁₁H₂₁, -C₁₂H₂₃, -C₁₃H₂₅, -C₁₄H₂₇, -C₁₅H₂₉, - C₁₆H₃₁ oder -C₁₇H₃₃ sein.

R¹ kann ein alkoxyliertes Ricinusöl (z.B. CAS 61791-12-6) sein.

R¹ kann ein alkoxyliertes Oleylamin (z.B. CAS 26635-93-8) sein.

Die Polyethergruppe (R⁵O)ₘ kann statistische Ethylen- und Propylenoxideinheiten oder Polyetherblöcke aus Polyethylenoxid und Polypropylenoxid enthalten.

Die Mercaptosilan-Ruß-Abmischung kann ein Gemisch von unterschiedlichen Mercaptosilanen der allgemeinen Formel I enthalten.

Das Gemisch aus unterschiedlichen Mercaptosilanen der allgemeinen Formel I kann eine Molekulargewichtsverteilung der Polyethergruppe aufweisen.

Das Gemisch aus unterschiedlichen Mercaptosilanen der allgemeinen Formel I kann unterschiedliche Mercaptosilane der allgemeinen Formel I enthalten, wobei R⁶ aus unterschiedlichen C-Atomkettenlängen besteht und eine Molekulargewichtsverteilung aufweist.

Das Gemisch aus unterschiedlichen Mercaptosilanen der allgemeinen Formel I kann unterschiedlichen Mercaptosilane der allgemeinen Formel I mit R⁴ gleich -CN oder von deren Kondensationsprodukten enthalten

Das Gemisch aus unterschiedlichen Mercaptosilanen der allgemeinen Formel I kann unterschiedliche Mercaptosilane der allgemeinen Formel I mit R⁴ gleich (C=O)-R⁹ oder von deren Kondensationsprodukten enthalten.

Die Polyethergruppe (R⁵-O)ₘ kann bevorzugt sein:
(-O-CH₂-CH₂-)ₐ,
(-O-CH(CH₃)-CH₂-)ₐ,
(-O-CH₂-CH(CH₃)-)ₐ,
(-O-CH₂-CH₂-)ₐ(-O-CH(CH₃)-CH₂-),
(-O-CH₂-CH₂-)(-O-CH(CH₃)-CH₂-)ₐ,
(-O-CH₂-CH₂-)ₐ(-O-CH₂-CH(CH₃)-),
(-O-CH₂-CH₂-)(-O-CH₂-CH(CH₃)-)ₐ,
(-O-CH(CH₃)-CH₂-)a(-O-CH₂-CH(CH₃)-),
(-O-CH(CH₃)-CH₂-)(-O-CH₂-CH(CH₃)-)ₐ,
(-O-CH₂-CH₂-)a(-O-CH(CH₃)-CH₂-)_{b}(-O-CH₂-CH(CH₃)-)_{c} oder Kombination miteinander,
wobei a, b und c voneinander unabhängig sind und a gleich 1-50, bevorzugt 2-30, besonders bevorzugt 3-20, ganz besonders bevorzugt 4-15, außerordentlich bevorzugt 5-12,
b gleich 1-50, bevorzugt 2-30, besonders bevorzugt 3-20, ganz besonders bevorzugt 4-15, außerordentlich bevorzugt 5-12 und
c gleich 1-50, bevorzugt 2-30, besonders bevorzugt 3-20, ganz besonders bevorzugt 4-15, außerordentlich bevorzugt 5-12 ist.

Die Indexe a, b und c sind ganze Zahlen und bezeichnen die Anzahl der Wiederholeinheiten.

Die Gruppe (R⁵-O)ₘ kann für R⁴ gleich -H, -CN oder -C(=O)-R⁹ bevorzugt Ethylenoxid- (CH₂-CH₂-O)ₐ oder Propylenoxid-(CH(CH₃)-CH₂-O)ₐ bzw. (CH₂-CH(CH₃)-O)ₐ -Einheiten enthalten.

Die Gruppe (R⁵-O)ₘ kann für R⁴ gleich -H, -CN oder -C(=O)-R⁹ bevorzugt Ethylenoxid- (CH₂-CH₂-O)ₐ und Propylenoxid-(CH(CH₃)-CH₂-O)ₐ bzw. (CH₂-CH(CH₃)-O)ₐ -Einheiten statistisch verteilt oder in Blöcken enthalten.

Die Alkylpolyethergruppe Gruppe (R⁵-O)ₘ kann für R⁴ gleich - H bevorzugt Ethylenoxid- (CH₂-CH₂-O)ₐ und Propylenoxid-(CH(CH₃)-CH₂-O)ₐ bzw. (CH₂-CH(CH₃)-O)ₐ -Einheiten statistisch verteilt oder in Blöcken enthalten.

Die Gruppe (R⁵-O)ₘ kann für R⁴ gleich -H bevorzugt Propylenoxid- (CH(CH₃)-CH₂-O)ₐ bzw. (CH₂-CH(CH₃)-O)ₐ-Einheiten enthalten.

Die Alkylpolyethergruppe O-(R⁵-O)ₘ-R⁶ kann für R⁴ gleich -H, -CN oder -C(C=O)-R⁹ sein:
O-(CH₂-CH₂O)₂-C₁₁H₂₃, O-(CH₂-CH₂O)₃-C₁₁H₂₃, O-(CH₂-CH₂O)₄-C₁₁H₂₃,
O-(CH₂-CH₂O)₅-C₁₁H₂₃, O-(CH₂-CH₂O)₆-C₁₁H₂₃, O-(CH₂-CH₂O)₇-C₁₁H₂₃,
O-(CH(CH₃)-CH₂O)₂-C₁₁H₂₃, O-(CH(CH₃)-CH₂O)₃-C₁₁H₂₃, O-(CH(CH₃)-CH₂O)₄-C₁₁H₂₃, O-(CH(CH₃)-CH₂O)₅-C₁₁H₂₃, O-(CH(CH₃)-CH₂O)₆-C₁₁H₂₃, O-(CH(CH₃)-CH₂O)₇-C₁₁H₂₃,
O-(CH₂-CH₂O)₂-C₁₂H₂₅, O-(CH₂-CH₂O)₃-C₁₂H₂₅, O-(CH₂-CH₂O)₄-C₁₂H₂₅,
O-(CH₂-CH₂O)₅-C₁₂H₂₅, O-(CH₂-CH₂O)₆-C₁₂H₂₅, O-(CH₂-CH₂O)₇-C₁₂H₂₅,
O-(CH(CH₃)-CH₂O)₂-C₁₂H₂₅, O-(CH(CH₃)-CH₂O)₃-C₁₂H₂₅, O-(CH(CH₃)-CH₂O)₄-C₁₂H₂₅, O-(CH(CH₃)-CH₂O)₅-C₁₂H₂₅, O-(CH(CH₃)-CH₂O)₆-C₁₂H₂₅, O-(CH(CH₃)-CH₂O)₇-C₁₂H₂₅,
O-(CH₂-CH₂O)₂-C₁₃H₂₇, O-(CH₂-CH₂O)₃-C₁₃H₂₇, O-(CH₂-CH₂O)₄-C₁₃H₂₇,
O-(CH₂-CH₂O)₅-C₁₃H₂₇, O-(CH₂-CH₂O)₆-C₁₃H₂₇, O-(CH₂-CH₂O)₇-C₁₃H₂₇,
O-(CH(CH₃)-CH₂O)₂-C₁₃H₂₇, O-(CH (CH₃)-CH₂O)₃-C₁₃H₂₇, O-(CH(CH₃)-CH₂O)₄-C₁₃H₂₇, O-(CH(CH₃)-CH₂O)₅-C₁₃H₂₇, O-(CH (CH₃)-CH₂O)₆-C₁₃H₂₇, O-(CH(CH₃)-CH₂O)₇-C₁₃H₂₇,
O-(CH₂-CH₂O)₂-C₁₄H₂₉, O-(CH₂-CH₂O)₃-C₁₄H₂₉, O-(CH₂-CH₂O)₄-C₁₄H₂₉,
O-(CH₂-CH₂O)₅-C₁₄H₂₉, O-(CH₂-CH₂O)₆-C₁₄H₂₉, O-(CH₂-CH₂O)₇-C₁₄H₂₉,
O-(CH(CH₃)-CH₂O)₂-C₁₄H₂₉, O-(CH(CH₃)-CH₂O)₃-C₁₄H₂₉, O-(CH(CH₃)-CH₂O)₄-C₁₄H₂₉, O-(CH(CH₃)-CH₂O)₅-C₁₄H₂₉, O-(CH(CH₃)-CH₂O)₆-C₁₄H₂₉, O-(CH(CH₃)-CH₂O)₇-C₁₄H₂₉,
O-(CH₂-CH₂O)₂-C₁₅H₃₁, O-(CH₂-CH₂O)₃-C₁₅H₃₁, O-(CH₂-CH₂O)₄-C₁₅H_{31,}
O-(CH₂-CH₂O)₅-C₁₅H₃₁, O-(CH₂-CH₂O)₆-C₁₅H₃₁, O-(CH₂-CH₂O)₇-C₁₅H₃₁,
O-(CH(CH₃)-CH₂O)₂-C₁₅H₃₁, O-(CH(CH₃)-CH₂O)₃-C₁₅H₃₁, O-(CH(CH₃)-CH₂O)₄-C₁₅H₃₁, O-(CH(CH₃)-CH₂O)₅-C₁₅H₃₁, O-(CH(CH₃)-CH₂O)₆-C₁₅H₃₁, O-(CH(CH₃)-CH₂O)-₇-C₁₅H₃₁,
O-(CH₂-CH₂O)₂-C₁₆H₃₃, O-(CH₂-CH₂O)₃-C₁₆H₃₃, O-(CH₂-CH₂O)₄-C₁₆H₃₃,
O-(CH₂-CH₂O)₅-C₁₆H₃₃, O-(CH₂-CH₂O)₆-C₁₆H₃₃, O-(CH₂-CH₂O)₇-C₁₆H₃₃,
O-(CH(CH₃)-CH₂O)₂-C₁₆H₃₃, O-(CH(CH₃)-CH₂O)₃-C₁₆H₃₃, O-(CH(CH₃)-CH₂O)₄-C₁₆H₃₃, O-(CH(CH₃)-CH₂O)₅-C₁₆H₃₃, O-(CH(CH₃)-CH₂O)₆-C₁₆H₃₃, O-(CH(CH₃)-CH₂O)₇-C₁₆H₃₃,
O-(CH₂-CH₂O)₂-C₁₇H₃₅, O-(CH₂-CH₂O)₃-C₁₇H₃₅, O-(CH₂-CH₂O)₄-C₁₇H₃₅,
O-(CH₂-CH₂O)₅-C₁₇H₃₅, O-(CH₂-CH₂O)₆-C₁₇H₃₅, O-(CH₂-CH₂O)₇-C₁₇H₃₅,
O-(CH(CH₃)-CH₂O)₂-C₁₇H₃₅, O-(CH(CH₃)-CH₂O)₃-C₁₇H₃₅, O-(CH(CH₃)-CH₂O)₄-C₁₇H₃₅, O-(CH(CH₃)-CH₂O)₅-C₁₇H₃₅, O-(CH(CH₃)-CH₂O)₆-C₁₇H₃₅ oder O-(CH(CH₃)-CH₂O)₇-C₁₇H₃₅.

Die Gruppe R⁵ kann substituiert sein. Die Gruppe R⁶ kann C₁₃H₂₇ sein.

R¹ kann -O-(C₂H₄-O)₅-C₁₁H₂₃, -O-(C₂H₄-O)₅-C₁₂H₂₅, -O-(C₂H₄-O)₅-C₁₃H₂₇, -O-(C₂H₄-O)₅-C₁₄H₂₉, -O-(C₂H₄-O)₅-C₁₅H₃₁, -O-(C₂H₄-O)₃-C₁₃H₂₇, -O-(C₂H₄-O)₄-C₁₃H₂₇, -O-(C₂H₄-O)₆-C₁₃H₂₇, -O-(C₂H₄-O)₇-C₁₃H₂₇, -O-(CH₂CH₂-O)₅-(CH₂)₁₀CH₃, -O-(CH₂CH₂-O)₅-(CH₂)₁₁CH₃, -O-(CH₂CH₂-O)₅-(CH₂)₁₂CH₃, -O-(CH₂CH₂-O)₅-(CH₂)₁₃CH₃, -O-(CH₂CH₂-O)₅-(CH₂)₁₄CH₃, -O-(CH₂CH₂-O)₃-(CH₂)₁₂CH₃, -O-(CH₂CH₂-O)₄-(CH₂)₁₂CH₃, -O-(CH₂CH₂-O)₆-(CH₂)₁₂CH₃, -O-(CH₂CH₂-O)₇-(CH₂)₁₂CH₃, 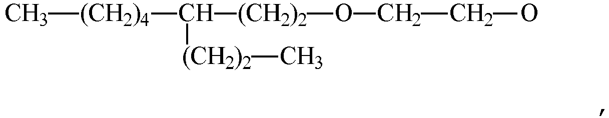 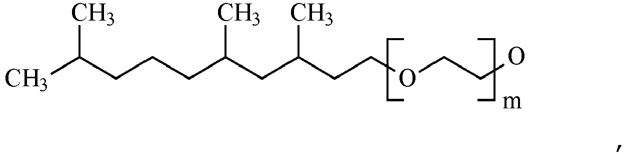 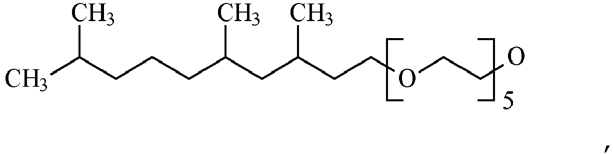 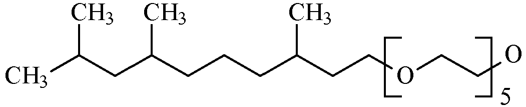 oder 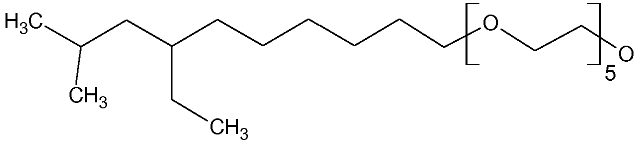 sein.

Die mittlere Verzweigungszahl der Kohlenstoffkette R⁶ kann 1 bis 5, vorzugsweise 1,2 bis 4, sein. Die mittlere Verzweigungszahl ist dabei definiert als die Anzahl der CH₃-Gruppen-1.

R³ kann CH₂, CH₂CH₂, CH₂CH₂CH₂, CH₂CH₂CH₂CH₂, CH(CH₃), CH₂CH(CH₃), CH(CH₃)CH₂, C(CH₃)₂, CH(C₂H₅), CH₂CH₂CH(CH₃), CH₂CH(CH₃)CH₂ oder 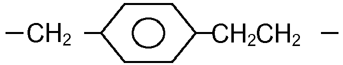 bedeuten.

Das Gemisch aus unterschiedlichen Mercaptosilanen der allgemeinen Formel I kann unterschiedliche Mercaptosilane der allgemeinen Formel I mit verschiedenen R¹ und R² Gruppen, wobei die R¹ und R² Gruppen aus Alkoxy und Alkylpolyethergruppen bestehen, enthalten.

Das Gemisch aus unterschiedlichen Mercaptosilanen der allgemeinen Formel I kann unterschiedliche Mercaptosilane der allgemeinen Formel I mit unterschiedlichem R² enthalten.

Das Gemisch aus unterschiedlichen Mercaptosilanen der allgemeinen Formel I kann unterschiedliche Mercaptosilane der allgemeinen Formel I mit verschiedenen R¹ und R² Gruppen, wobei die R¹ und R² Gruppen aus Ethoxy und Alkylpolyethergruppen bestehen und R⁶ eine Alkylkettenlänge von 13 C-Atomen besitzt, R⁵ Ethylen und m im Mittel 5 ist, enthalten.

Das Gemisch aus unterschiedlichen Mercaptosilanen der allgemeinen Formel I kann unterschiedliche Mercaptosilane der allgemeinen Formel I enthalten, wobei R² gleich oder verschieden und eine Ethoxy- oder Alkylpolyethergruppe (R¹) ist, R⁶ eine Alkylkettenlänge von 13 C-Atomen, R⁵ gleich Ethylen und m im Mittel 5 ist, und R² unterschiedlich ist.

Das Gemisch aus unterschiedlichen Mercaptosilanen der allgemeinen Formel I kann unterschiedliche Mercaptosilane der allgemeinen Formel I enthalten, wobei R¹ und R² Alkoxy und Alkylpolyethergruppen sind und R⁶ aus unterschiedlichen C-Atomkettenlängen besteht und eine Molekulargewichtsverteilung aufweist.

Das Gemisch aus unterschiedlichen Mercaptosilanen der allgemeinen Formel I kann unterschiedliche Mercaptosilane der allgemeinen Formel I enthalten, wobei R² gleich oder verschieden und eine Alkoxy- oder Alkylpolyethergruppe (R¹) ist, und R² in dem Gemisch unterschiedlich ist, R⁶ aus unterschiedlichen C-Atomkettenlängen besteht und eine Molekulargewichtsverteilung aufweist.

Das Gemisch aus unterschiedlichen Mercaptosilanen der allgemeinen Formel I kann bevorzugt 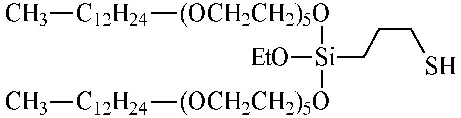 und/oder 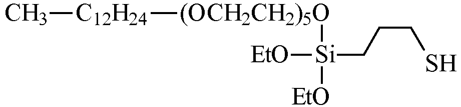 und/oder Hydrolyse- und/oder Kondensationsprodukte der vorgenannten Verbindungen enthalten.

Aus den Mercaptosilanen der Formel I können durch Wasserzugabe und ggf. Additivzugabe leicht Kondensationsprodukte, das heisst Oligo- und Polysiloxane gebildet werden.

Diese oligomeren oder polymeren Siloxane der Verbindungen der Formel I können als Kopplungsreagenzien für dieselben Anwendungen wie die monomeren Verbindungen der Formel I verwendet werden.

Die Mercaptosilanverbindungen können auch als Mischung der oligomeren oder polymeren Siloxane von Mercaptosilanen der allgemeinen Formel I oder als Mischungen von Mercaptosilanen der allgemeinen Formel I mit Mischungen der oligomeren oder polymeren Siloxane von Mercaptosilanen der allgemeinen Formel I vorliegen.

Der Ruß kann eine STSA-Oberfläche (gemessen nach ASTM D 6556) von 10-150 m²/g, vorzugsweise von 15-90 m²/g, aufweisen. Der Ruß kann eine OAN-Zahl (gemessen nach ASTM D 2414) von 50-150 ml/100g, vorzugsweise von 70-140 ml/100g aufweisen.

Besonders bevorzugt kann der Ruß eine STSA-Oberfläche von 20-70 m²/g und eine OAN-Zahl von 100-135 ml/100g haben.

Das Gewichtsverhältnis von Mercaptosilan der allgemeinen Formel I zu Ruß kann 30:70 bis 80:20, vorzugsweise 40:60 bis 70:30, betragen.

Die erfindungsgemäßen Mercaptosilan-Ruß-Abmischungen können hergestellt werden, indem man mindestens 20 Gew.-%, vorzugsweise mindestens 25 Gew.-%, besonders bevorzugt mindestens 30 Gew.-%, Mercaptosilane der allgemeinen Formel I, bezogen auf die Mercaptosilan-Ruß-Abmischung, mit Ruß mischt, wobei der Ruß einen Eisengehalt von < 9 ppm, ganz besonders bevorzugt von 0,1-6 ppm, aufweist.

Das Verfahren kann kontinuierlich oder diskontinuierlich durchgeführt werden.

Das Mercaptosilan der allgemeinen Formel I kann zu Ruß in einem Gewichtsverhältnis von 30:70 bis 80:20, vorzugsweise 40:60 bis 70:30, eingesetzt werden.

Das Verfahren kann man bei Temperaturen zwischen 5 und 200°C, vorzugsweise zwischen 10 und 100°C, besonders bevorzugt zwischen 15 und 60°C, durchführen. Zur Vermeidung von Kondensationsreaktionen kann es vorteilhaft sein, die Reaktion in einer wasserfreien Umgebung, idealerweise in einer Inertgasatmosphäre, durchzuführen.

Das Verfahren kann man bei Normaldruck oder reduziertem Druck durchführen.

Die erfindungsgemäße Mercaptosilan-Ruß-Abmischung kann als Haftvermittler zwischen anorganischen Materialien, zum Beispiel Glasfasern, Metallen, oxidischen Füllstoffen, Kieselsäuren, und organischen Polymeren, zum Beispiel Duroplasten, Thermoplasten oder Elastomeren beziehungsweise als Vernetzungsmittel und Oberflächenmodifizierungsmittel verwendet werden. Die erfindungsgemäße Mercaptosilan-Ruß-Abmischung kann als Kopplungsreagenz in Kautschukmischungen, beispielsweise Reifenlaufflächen, verwendet werden.

Ein weiterer Gegenstand der Erfindung ist eine Kautschukmischung, enthaltend
(A) einen Kautschuk oder eine Mischung von Kautschuken,
(B) einen Füllstoff, vorzugsweise gefällte Kieselsäure, und
(C) mindestens eine erfindungsgemäße Mercaptosilan-Ruß-Abmischung.

Als Kautschuk können Naturkautschuk und/oder Synthesekautschuke verwendet werden. Bevorzugte Synthesekautschuke sind beispielsweise bei W. Hofmann, Kautschuktechnologie, Genter Verlag, Stuttgart 1980, beschrieben. Sie können unter anderem
- Polybutadien (BR),
- Polyisopren (IR),
- Styrol/Butadien-Copolymerisate, beispielsweise Emulsions-SBR (E-SBR) oder Lösungs-SBR (L-SBR), vorzugsweise mit Styrolgehalten von 1 bis 60 Gew.-%, besonders vorzugsweise 5 bis 50 Gew.-% (SBR),
- Chloropren (CR)
- Isobutylen/Isopren-Copolymerisate (IIR),
- Butadien/Acrylnitril-Copolymere mit Acrylnitrilgehalten von 5 bis 60, vorzugsweise 10 bis 50 Gew.-% (NBR),
- teilhydrierter oder vollständig hydrierter NBR-Kautschuk (HNBR)
- Ethylen/Propylen/Dien-Copolymerisate (EPDM)
- oben genannte Kautschuke, die zusätzlich funktionelle Gruppen besitzen, wie z.B. Carboxy- , Silanol- oder Epoxygruppen, beispielsweise Epoxidierter NR, Carboxyfunktionalisierter NBR oder Silanol- (-SiOH) bzw. Siloxy-funktionalisierter (-Si-OR) SBR,
sowie Mischungen dieser Kautschuke sein.

In einer bevorzugten Ausführungsform können die Kautschuke schwefelvulkanisierbar sein. Für die Herstellung von PKW-Reifenlaufflächen können insbesondere anionisch polymerisierte L-SBR-Kautschuke (Lösungs-SBR) mit einer Glastemperatur oberhalb von -50 °C sowie deren Mischungen mit Dienkautschuken eingesetzt werden. Besonders bevorzugt können L-SBR-Kautschuke, deren Butadienteile einen Vinylanteil von über 20 Gew.-% aufweisen, eingesetzt werden. Ganz besonders bevorzugt können L-SBR-Kautschuke, deren Butadienteile einen Vinylanteil von über 50 Gew.-% aufweisen, eingesetzt werden.

Bevorzugt können Mischungen der oben genannten Kautschuke, die einen L-SBR-Anteil von über 50 Gew.-%, besonders bevorzugt über 60 Gew.-%, aufweisen, eingesetzt werden. Als Füllstoffe können für die erfindungsgemäße Kautschukmischung die folgenden Füllstoffe eingesetzt werden:
- Ruße: Die hierbei zu verwendenden Ruße sind nach dem Flammruß-, Furnace-, Gasruß oder Thermal-Verfahren hergestellt und besitzen BET-Oberflächen von 20 bis 200 m²/g. Die Ruße können gegebenenfalls auch Heteroatome wie zum Beispiel Si enthalten.
- Amorphe Kieselsäuren, hergestellt zum Beispiel durch Fällung von Lösungen von Silikaten oder Flammenhydrolyse von Siliciumhalogeniden mit spezifischen Oberflächen von 5 bis 1000 m²/g, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden vorliegen.
- Synthetische Silikate, wie Aluminiumsilikat, Erdalkalisilikate, wie Magnesiumsilikat oder Calciumsilikat, mit BET-Oberflächen von 20 bis 400 m²/g und Primärteilchendurchmessern von 10 bis 400 nm.
- Synthetische oder natürliche Aluminium-oxide und - hydroxide
- Natürliche Silikate, wie Kaolin und andere natürlich vorkommende Kieselsäuren.
- Glasfaser und Glasfaserprodukte (Matten, Stränge) oder Mikroglaskugeln.

Bevorzugt können amorphe Kieselsäuren, hergestellt durch Fällung von Lösungen von Silikaten, mit BET-Oberflächen von 20 bis 400 m²/g, besonders bevorzugt 100 m²/g bis 250 m²/g, in Mengen von 5 bis 150 Gew.-Teilen, jeweils bezogen auf 100 Teile Kautschuk, eingesetzt werden.

Die genannten Füllstoffe können alleine oder im Gemisch eingesetzt werden.

Die Kautschukmischung kann 5 bis 150 Gew.-Teile Füllstoff (B) und 0,1 bis 35 Gew.-Teile, bevorzugt 2 bis 20 Gew.-Teile, besonders bevorzugt 5 bis 15 Gew.-Teile, erfindungsgemäße Mercaptosilan-Ruß-Abmischung (C), enthalten, wobei die Gew.-Teile auf 100 Gew.-Teile Kautschuk bezogen sind.

Die Kautschukmischung kann zusätzlich Silikonöl und/oder Alkylsilan enthalten.

Die erfindungsgemäße Kautschukmischung kann weitere bekannte Kautschukhilfsmittel, wie zum Beispiel Vernetzer, Vulkanisationsbeschleuniger, Reaktionsbeschleuniger, - verzögerer, Alterungsschutzmittel, Stabilisatoren, Verarbeitungshilfsmittel, Weichmacher, Wachse oder Metalloxide enthalten, sowie ggf. Aktivatoren, wie Triethanolamin, Polyethylenglykol oder Hexantriol.

Die Kautschukhilfsmittel können in üblichen Mengen, die sich unter anderem nach dem Verwendungszweck richten, eingesetzt werden. Übliche Mengen können zum Beispiel Mengen von 0,1 bis 50 Gew.-%, bezogen auf Kautschuk, sein.

Als Vernetzer können Schwefel oder organische Schwefelspender eingesetzt werden.

Die erfindungsgemäße Kautschukmischung kann weitere Vulkanisationsbeschleuniger enthalten. Beispielsweise können als geeignete Vulkanisationsbeschleuniger Mercaptobenzthiazole, Sulfenamide, Guanidine, Dithiocarbamate, Thioharnstoffe, Thiocarbonate sowie deren Zinksalze, wie z.B. Zinkdibutyldithiocarbamat, eingesetzt werden.

Die erfindungsgemäße Kautschukmischung kann bevorzugt zusätzlich
(D) ein Thiuramsulfid- und/oder Carbamatbeschleuniger und/oder die entsprechenden Zinksalze,
(E) ein stickstoffhaltigen Co-Aktivator,
(F) gegebenenfalls weitere Kautschukhilfsmittel und
(G) gegebenenfalls weitere Beschleuniger
enthalten, wobei das Gewichtsverhältnis Beschleuniger (D) zu stickstoffhaltigem Co-Aktivator (E) gleich oder größer 1 ist.

Die erfindungsgemäße Kautschukmischung kann (D) Tetrabenzylthiuramdisulfid oder Tetramethylthiuramdisulfid mit mindestens 0,25 Gewichtsteilen, bezogen auf 100 Gewichtsteile Kautschuk, (E) Diphenylguanidin mit maximal 0,25 Gewichtsteile, bezogen auf 100 Gewichtsteile Kautschuk, und (G) Cyclohexyl- oder Dicyclohexylsulfenamid mit mehr Gewichtsteilen als (D) enthalten.

Bevorzugt können Sulfenamide zusammen mit Guanidinen und Thiuramen, besonders bevorzugt Cyclohexylsulfenamid oder Dicyclohexylsulfenamid zusammen mit Diphenylguanidin und Tetrabenzylthiuramdisulfid oder Tetramethylthiuramdisulfid, eingesetzt werden.

Die Vulkanisationsbeschleuniger und Schwefel können in Mengen von 0,1 bis 10 Gew.-%, bevorzugt 0,1 bis 5 Gew.-%, bezogen auf den eingesetzten Kautschuk, eingesetzt werden. Besonders bevorzugt können Schwefel und Sulfenamide in Mengen von 1 bis 4 Gew.-%, Thiurame in Mengen von 0,2 bis 1 Gew.-% und Guanidine in Mengen von 0 Gew.-% bis 0,5 Gew.-% eingesetzt werden.

Ein weiterer Gegenstand der Erfindung ist ein Verfahren zur Herstellung der erfindungsgemäßen Kautschukmischung, welches dadurch gekennzeichnet ist, dass man den Kautschuk oder die Mischung von Kautschuken (A), den Füllstoff (B), mindestens eine erfindungsgemäße Mercaptosilan-Ruß-Abmischung (C) und gegebenenfalls weitere Kautschukhilfsmittel in einem Mischaggregat mischt.

Die Abmischung der Kautschuke mit dem Füllstoff, gegebenenfalls Kautschukhilfsmitteln und der erfindungsgemäßen Mercaptosilane kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der Füllstoff, die erfindungsgemäßen Mercaptosilane und die Kautschukhilfsmittel bei 100 bis 170°C eingemischt werden. Dabei können sich die Zugabereihenfolge und der Zugabezeitpunkt der Einzelkomponenten entscheidend auf die erhaltenen Mischungseigenschaften auswirken. Üblicherweise kann die so erhaltene Kautschukmischung in einem Innenmischer oder auf einer Walze bei 40 bis 110 °C mit den Vernetzungschemikalien versetzt werden und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischung kann bei Temperaturen von 80 bis 200 °C, bevorzugt 130 bis 180°C, gegebenenfalls unter Druck von 10 bis 200 bar erfolgen.

Die erfindungsgemäße Kautschukmischung kann zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungselementen, wie zum Beispiel Dichtungsringe und Dämpfungselemente, verwendet werden.

Ein weiterer Gegenstand der Erfindung sind Formkörper, erhältlich aus der erfindungsgemäßen Kautschukmischung durch Vulkanisation.

Die erfindungsgemäßen Mercaptosilan-Ruß-Abmischungen haben den Vorteil, dass sich auch bei längerer Lagerzeit das Mercaptosilan nicht in dem Maße verändert, wie bei den bekannten Mercapto/Füllstoffabmischungen.

### Beispiele:

### Eisengehaltbestimmung von Mercaptosilan-Ruß-Abmischung

Gesamteisengehaltbestimmung nach Hochdruckveraschung mittels ICP-MS:
Ungefähr 200-300 mg der Mercaptosilan-Ruß-Abmischung wird auf 0,1 mg genau in ein Quarzglas-Behälter eingewogen.

10 mL HNO3 (ungefähr 65 %-Gew., suprapur) werden zugegeben und die Probe wird komplett in einem Druckbehälter aufgeschlossen bei einer Temperatur von min. 280°C bis maximal 500°C.

Danach wird der Aufschluss auf 50 mL mit Wasser (ultrapur) in einen Meßkolben (Plastik) aufgefüllt.

Der Aufschluss erfolgt mit einer Doppelbestimmung.

Von jedem Aufschluss wird 1 mL in ein Probenröhrchen gegeben und mit Wasser (ultrapur) auf 10 mL aufgefüllt.

Jede Lösung wird in einem induktiv gekoppelten Plasmamassenspektrometer (ICP-MS) mit einer Kalibrierung gemessen.

Für die Kalibirierung werden vier Referenzlösungen und eine Blindwertlösung aus einer Standardlösung, basierend auf ein NIST-Referenzmaterial, hergestellt.

Entsprechende Chemikalienblindwerte werden zusammen mit den Probenlösungen gemessen. Ein interner Standard wird in alle Messlösungen in gleicher Konzentration zugegeben.

### Siebrückstandsbestimmung von Ruß

Der Siebrückstand 325 mesh wird nach ASTM D1514 in ppm bestimmt.

### STSA-Oberfläche

Die Bestimmung der STSA erfolgt nach ASTM D 6556.

### OAN-Zahl

Die Bestimmung der OAN erfolgt nach ASTM D 2414.

### Lagerstabilität, Bestimmung per GPC:

### Durchführung:

Es werden die Acetonitril-Extrakte an einer GPC-Säule untersucht. Zur Quantifizierung der Silan-Gehalte wird eine 1-Punkt-Kalibrierung mit der Reinsubstanz des jeweils zu bestimmenden Silans durchgeführt.

### Geräteeinstellungen:

HPLC-System: HPLC-Pumpe S2100, Firma SFD, Autosampler SIL10-AF, Firma Shimadzu, RI-Detektor 7515A, Firma ERC, Controller CBM-20A, Firma Shimadzu Auswertesoftware Class VP5, Firma Shimadzu
Vorsäule: MZ-Gel SDplus 50Å 5µ 50x8mm, Firma MZ-Analysentechnik
Analyt. Säule: MZ-Gel SDplus 50Å 5µ 300x8mm, Firma MZ-Analysentechnik
Mobile Phase: 100% Methylethylketon (MEK)
Fluß: 1,0 ml/min
Dos.-Vol.: 30 µl
Analysentemperatur: Raumtemperatur 20°C

10 g Produkt werden mit 180 ml Acetonitril versetzt und 2 h gerührt, anschließend abfiltriert und 1:1 mit Methylethylketon verdünnt und injiziert.

Ausgewertet wird die Peakfläche des jeweiligen Silans im HPLC-Chromatogramm des RI-Detektors (keine GPC-Molmassenauswertung) .

In den Vergleichsbeispielen wird N 330 (Eisengehalt: 16 ppm) als Referenzruß und Purex HS 45 (Eisengehalt: 6 ppm) in den erfindungsgemäßen Beispielen eingesetzt (beides Verkaufsprodukte der Firma Orion Engineered Carbons). Als Mercaptosilan der Formel I wird Si 363 ((R*O)₃Si(CH₂)₃SH mit R*=C₁₃H₂₇(OC₂H₄)ₙ und C₂H₅, mittlerer Gehalt an C₂H₅ = 33%, mittlere Anzahl n=5) der Firma Evonik Industries eingesetzt.

### Beispiel 1:

In einem Henschelmischer wird 1 kg Ruß (a: N 330, b: Purex HS 45) vorgelegt. Bei einer Durchflußtemperatur von 20 °C wird einstufig bei einer Umdrehungsgeschwindigkeit von 1500 U/min mit 40 bar Druck und einem Düsendurchmesser von 0,5mm 462 g Mercaptosilan Si 363 zugegeben, bis eine Mischungsendtemperatur von 62-65°C erreicht ist (Füllgrad: 45%) .

Zur Bestimmung der Lagerstabilität werden die Mercaptosilan-Ruß-Abmischungen bei T=20°C, 60% Luftfeuchte für 18 Tage gelagert.

Die Messung der Vergleichs-Mercaptosilan-Ruß-Abmischung (a: N 330 / Si 363 11 ppm Fe) ergibt nach der Lagerung 74 Gew.-% Si 363, bezogen auf den theoretischen Wert. Die Messung der erfindungsgemäßen Mercaptosilan-Ruß-Abmischung (b: Purex 45 / Si 363 4 ppm Fe) ergibt nach der Lagerung 85 Gew.-% Si 363, bezogen auf den theoretischen Wert.

### Beispiel 2

Die für die Kautschukmischungen verwendete Rezeptur ist in der folgenden Tabelle 1 angegeben. Dabei bedeutet die Einheit phr Gewichtsanteile bezogen auf 100 Teile des eingesetzten Rohkautschuks.

**Tabelle 1**

| Substanz | Menge [phr] | Menge [phr] | Menge [phr] |
|---|---|---|---|
| 1. Stufe | Referenzkautschuk mischung I "in situ" | Referenzkautschukmischung II, enthaltend Mercaptosilan-Ruß-Abmischung gemäß Beispiel 1a | Erf.Kautschukmischung, enthaltend Mercaptosilan-Ruß-Abmischung gemäß Beispiel 1b |
| Buna VSL 5025-1 | 96 | 96 | 96 |
| Buna CB 24 | 30 | 30 | 30 |
| Ultrasil 7000 GR | 80 | 80 | 80 |
| ZnO | 3 | 3 | 3 |
| Stearinsäure | 2 | 2 | 2 |
| Naftolen ZD | 10 | 10 | 10 |
| Vulkanox 4020 | 1,5 | 1,5 | 1,5 |
| Corax N 330 | 10 | - | - |
| Protektor G 3108 | | 1 | 1 |
| Si 363 | 10 | - | - |
| Mercaptosilan-Ruß-Abmischung | - | 20 | 20 |

| 2. Stufe | | | |
|---|---|---|---|
| Batch Stufe 1 | | | |

| 3. Stufe | | | |
|---|---|---|---|
| Batch Stufe 2 | | | |
| Perkacit TBzTD | 0,2 | 0,2 | 0,2 |
| Vulkacit CZ | 1,5 | 1,5 | 1,5 |
| Schwefel | 2,2 | 2,2 | 2,2 |

Bei dem Polymer VSL 5025-1 handelt es sich um ein in Lösung polymerisiertes SBR-Copolymer der Bayer AG, mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5. Ultrasil 7000 GR ist eine leicht dispergierbare Kieselsäure der Evonik Industries AG und besitzt eine BET-Oberfläche von 170 m²/g. Corax N330 ist ein Carbon Black der Orion Engineered Carbons mit einer STSA-Oberfläche von 76 m²/g.

Als aromatisches Öl wird Naftolen ZD der Chemetall verwendet, bei Vulkanox 4020 handelt es sich um 6PPD der Bayer AG und Protektor G3108 ist ein Ozonschutzwachs der Paramelt B.V.. Vulkacit D (DPG) und Vulkacit CZ (CBS) sind Handelsprodukte der Bayer AG. Perkacit TBzTD (Tetrabenzylthiuramdisulfid) ist ein Produkt von Flexsys N.V..

Die Kautschukmischung wird dreistufig in einem Innenmischer gemäß Tabelle 2 hergestellt.

**Tabelle 2:**

| | | **Stufe 1** |
|---|---|---|
| **Einstellungen** | | |
| Mischaggregat | | Werner & Pfleiderer GK 1,5E |
| Drehzahl | | 70 min⁻¹ |
| Stempeldruck | | 5,5 bar |
| Durchflußtemp. | | 80 °C |

| **Mischvorgang** | | |
|---|---|---|
| 0 bis | 1 min | Buna VSL 5025-1 + Buna CB 24 |
| 1 bis | 2 min | ½ Ultrasil 7000 GR, ZnO, Stearinsäure, Naftolen ZD, Ruß, Silan-Ruß-Abmischung |
| 2 bis | 4 min | ½ Ultrasil 7000 GR, Vulkanox 4020, Protektor G3108 |
| 4 bis | 5 min | mischen (eventuell Drehzahl ändern) auf 155°C |
| 5 min | | lüften |
| 5 bis | 6 min | mischen und ausfahren |
| | | |
| Batch-Temp. | | 150-160°C |
| Lagerung | | 24 h bei 20°C |

| | | **Stufe 2** |
|---|---|---|
| **Einstellungen** | | |
| Mischaggregat Drehzahl | | wie in Stufe 1 bis auf: 80 min⁻¹ |

| **Mischvorgang** | | |
|---|---|---|
| 0 bis | 2 min | Batch Stufe 1 aufbrechen |
| 2 bis | 5 min | Batchtemperatur 155°C durch Drehzahlvariation halten |
| | 5 min | ausfahren |
| | | |
| Batch-Temp. | | 150-160°C |
| Lagerung | | 4 h bei 20°C |

| | | **Stufe 3** |
|---|---|---|
| **Einstellungen** | | |
| Mischaggregat | | wie in Stufe 1 bis auf |
| Drehzahl | | 40 min⁻¹ |
| Durchflußtemp. | | 50 °C |

| **Mischvorgang** | | |
|---|---|---|
| 0 bis | 0,5 min | Batch Stufe 2 |
| 0,5 bis | 2 min | Beschleuniger und Schwefel |
| | 2 min | ausfahren und auf Labormischwalzwerk Fell bilden (Durchmesser 200 mm, Länge 450 mm, Durchflußtemperatur 50°C) |
| | | Homogenisieren: |
| | | 5* links, 5* rechts einschneiden und umklappen sowie |
| | | 3* bei engem Walzenspalt (3 mm) und |
| | | 3* bei weitem Walzenspalt (6 mm) stürzen und |
| | | anschließend ein Fell ausziehen |
| Batch-Temp. | | <110°C |

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgt gemäß den in Tabelle 3 angegebenen Prüfmethoden.

**Tabelle 3:**

| Physikalische Testung | Norm/ Bedingungen |
|---|---|
| ML 1+4, 100°C (3. Stufe) | DIN 53523/3, ISO 667 |
| Zugversuch am Ring, 23°C | DIN 53504, ISO 37 |
| Zugfestigkeit | |
| Spannungswerte | |
| Bruchdehnung | |
| Shore-A-Härte, 23°C | DIN 53 505 |
| Ball-Rebound, 60°C | DIN EN ISO 8307 Stahlkugel 19 mm, 28 g |
| DIN-Abrieb, 10 N Kraft | DIN 53 516 |
| Viskoelastische Eigenschaften 0 und 60°C, 16 Hz, 50 N Vorkraft und 25 N Amplitudenkraft | DIN 53 513, ISO 2856 |
| Komplexer Modul E* (MPa) | |
| Verlustfaktor tan δ (-) | |

In der Tabelle 4 sind die gummitechnischen Daten für Rohmischung und Vulkanisat angegeben.

**Tabelle 4:**

| | | Referenzkautschukmischung I in-situ | Referenzkautschukmischung II | Erf. Kautschukmischung, enthaltend Mercaptosilan-Ruß-Abmischung gemäß Beispiel 1b |
|---|---|---|---|---|
| Rohmischungsergebnisse | | | | |
| ML(1+4) bei 100°C, 3.Stufe | [ME] | 64 | 107 | 64 |

| Vulkanisatergebnisse | | | | |
|---|---|---|---|---|
| Spannungswert 100% | [MPa ] | 2 | 1,9 | 1,9 |
| Bruchdehnung | [%] | 290 | 305 | 315 |
| DIN-Abrieb | [mm³ ] | 73 | 81 | 77 |
| Ball-Rebound, 70°C | [%] | 70,2 | 61,1 | 69,1 |

| MTS, 16Hz, 50N Vorkraft, 25N Ampl.kraft | | | | |
|---|---|---|---|---|
| Verlustfaktor tan δ, 60°C | [-] | 0,088 | 0,134 | 0,091 |

Es zeigt sich, dass nur bei der erfindungsgemäßen Kautschukmischung die Werte der in-situ Mischung (Referenzkautschukmischung I) erreicht werden können. Die Referenzkautschukmischung II, die einen Ruß mit einem Eisenanteil größer als 9 ppm enthält, weist deutliche Nachteile in der Viskosität und in den dynamischen Daten auf, was einem deutlich schlechteren Rollwiderstand entspricht.

### Beispiel 3:

Die für die Kautschukmischungen verwendete Rezeptur ist in der folgenden Tabelle 5 angegeben. Dabei bedeutet die Einheit phr Gewichtsanteile bezogen auf 100 Teile des eingesetzten Rohkautschuks.

Die für die Referenzkautschukmischungen verwendete Silan-Ruß-Abmischung X 50-S (Si 69 auf N 330) ist kommerziell von der Evonik Industries erhältlich.

**Tabelle 5:**

| Substanz | Menge [phr] | Menge [phr] |
|---|---|---|
| 1. Stufe | Referenzkautschukmischung III | Erf.Kautschukmischung, enthaltend Mercaptosilan-Ruß-Abmischung gemäß Beispiel 1b |
| Buna VSL 5025-1 | 96 | 96 |
| Buna CB 24 | 30 | 30 |
| Ultrasil 7000 GR | 80 | 80 |
| ZnO | 3 | 3 |
| Stearinsäure | 2 | 2 |
| Naftolen ZD | 10 | 10 |
| Vulkanox 4020 | 1,5 | 1,5 |
| Protektor G 3108 | 1 | 1 |
| X 50-S | 12,8 | - |
| Silan-Ruß-Abmischung | - | 20 |

| 2. Stufe | | |
|---|---|---|
| Batch Stufe 1 | | |

| 3. Stufe | | |
|---|---|---|
| Batch Stufe 2 | | |
| Vulkacit D | 2 | 0 |
| Perkacit TBzTD | 0,2 | 0,5 |
| Vulkacit CZ | 1,5 | 1,5 |
| Schwefel | 1,5 | 2,2 |

Bei dem Polymer VSL 5025-1 handelt es sich um ein in Lösung polymerisiertes SBR-Copolymer der Bayer AG, mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5.

Ultrasil 7000 GR ist eine leicht dispergierbare Kieselsäure der Evonik Industries AG und besitzt eine BET-Oberfläche von 170 m²/g.

Als aromatisches Öl wird Naftolen ZD der Chemetall verwendet, bei Vulkanox 4020 handelt es sich um 6PPD der Bayer AG und Protektor G3108 ist ein Ozonschutzwachs der Paramelt B.V.. Vulkacit D (DPG) und Vulkacit CZ (CBS) sind Handelsprodukte der Bayer AG. Perkacit TBzTD (Tetrabenzylthiuramdisulfid) ist ein Produkt von Flexsys N.V..

Die Kautschukmischung wird dreistufig in einem Innenmischer gemäß Tabelle 2 hergestellt.

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgt gemäß den in Tabelle 3 angegebenen Prüfmethoden.

In der Tabelle 6 sind die gummitechnischen Daten für Rohmischung und Vulkanisat angegeben.

**Tabelle 6:**

| Methoden (Vulkanisationszeit: 25 min bei 165°C) | | Referenzkautschukmischung III | Erf.Kautschukmischung, enthaltend Mercaptosilan-Ruß-Abmischung gemäß Beispiel 1b |
|---|---|---|---|
| Zugfestigkeit | [MPa] | 13,0 | 14,7 |
| Modul 100% | [MPa] | 2,5 | 2,2 |
| Modul 300% | [MPa] | 12,2 | 10,6 |
| Modul 300% / 100% | [-] | 4,9 | 4,8 |
| Bruchdehnung | [%] | 310 | 370 |
| Shore-A-Härte | [SH] | 70 | 71 |
| Ball-Rebound, RT | [%] | 36 | 42 |
| DIN Abrieb | [mm³] | 83 | 77 |
| Weiterreißwiderstand | [N/mm] | 18 | 40 |

| MTS, 16Hz, 50N +/- 25N | | | |
|---|---|---|---|
| E*, 0°C | [MPa] | 33,5 | 29 |
| E*, 60°C | [MPa] | 13,0 | 13,9 |
| E", 0°C | [MPa] | 12,0 | 8,8 |
| E", 60°C | [MPa] | 1,5 | 1,2 |
| tan δ, 0°C | [-] | 0,390 | 0,314 |
| tan δ, 60°C | [-] | 0,112 | 0,088 |

Die erfindungsgemäße Kautschukmischung enthaltend die Mercaptosilan-Ruß-Abmischung gemäß Beispiel 1b zeigt im Vergleich zur Referenzkautschukmischung III eine bessere Zugfestigkeit, eine höhere Bruchdehnung, einen niedrigeren DIN Abrieb (entspricht einem geringeren Verschleiß), einen deutlich höheren Weiterreißwiderstand, einen sehr niedrigen tanδ 60 °C (was einem um 20% erniedrigtem Wert gegenüber der Referenz X50-S entspricht), was ein Indiz für einen signifikant verbesserten Rollwiderstand ist.

## Patentansprüche

1. Mercaptosilan-Ruß-Abmischung, enthaltend mindestens 20 Gew.-% Mercaptosilan der allgemeinen Formel I 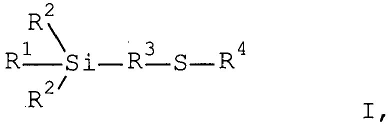 bezogen auf die Mercaptosilan-Ruß-Abmischung,
wobei R¹ eine Alkylpolyethergruppe -O-(R⁵-O)ₘ-R⁶ ist, mit R⁵ gleich oder verschieden, eine verzweigte oder unverzweigte, gesättigte oder ungesättigte, aliphatische zweibindige C1-C30 Kohlenwasserstoffgruppe, m im Mittel 1 bis 30 ist, und
R⁶ aus mindestens 1 C-Atomen besteht und eine unsubstituierte oder substituierte, verzweigte oder unverzweigte einbindige Alkyl-, Alkenyl, Aryl oder Aralkylgruppe ist,
R² gleich oder verschieden und eine R¹-, C1-C12-Alkyl- oder R⁷O-Gruppe ist, mit R⁷ gleich H, Methyl, Ethyl, Propyl, C9-C30 verzweigten oder unverzweigten einbindigen Alkyl-, Alkenyl-, Aryl-, Aralkylgruppe oder (R⁸)₃Si-Gruppe, mit R⁸ gleich C1-C30 verzweigte oder unverzweigte Alkyl- oder Alkenyl-Gruppe,
R³ eine verzweigte oder unverzweigte, gesättigte oder ungesättigte, aliphatische, aromatische oder gemischt aliphatische /aromatische zweibindige C1-C30 Kohlenwasserstoffgruppe und
R⁴ gleich H, CN oder (C=O)-R⁹ ist, mit R⁹ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe,
und Ruß,
**dadurch gekennzeichnet, dass** die Mercaptosilan-Ruß-Abmischung einen Eisengehalt von < 9 ppm aufweist und ein Gemisch von Mercaptosilanen der allgemeinen Formel I 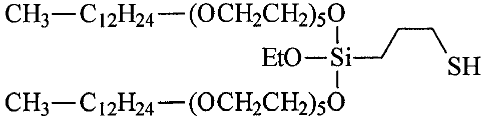 und/oder 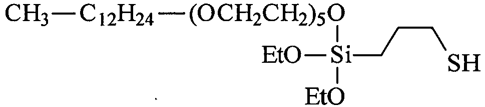 und/oder Hydrolyse- und/oder Kondensationsprodukte der vorgenannten Verbindungen enthält.

2. Verwendung der Mercaptosilan-Ruß-Abmischung gemäß Anspruch 1 zur Herstellung von Kautschukmischungen.

3. Kautschukmischung, **dadurch gekennzeichnet, daß** diese
(A) einen Kautschuk oder eine Mischung von Kautschuken,
(B) einen Füllstoff und
(C) mindestens eine Mercaptosilan-Ruß-Abmischung gemäß Anspruch 1
enthält.

4. Verfahren zur Herstellung der Kautschukmischung gemäß Anspruch 3, **dadurch gekennzeichnet, daß** man den Kautschuk oder die Mischung von Kautschuken, den Füllstoff, gegebenenfalls weitere Kautschukhilfsmittel, sowie mindestens ein Mercaptosilan-Ruß-Abmischung gemäß Anspruch 1 mischt.

5. Verwendung von Mercaptosilan-Ruß-Abmischung gemäß Anspruch 1 zur Herstellung von Formkörpern.

6. Verwendung von Mercaptosilan-Ruß-Abmischung gemäß Anspruch 1 in Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

## Claims

1. Mercaptosilane-carbon black blend, comprising at least 20 wt.% of mercaptosilane of the general formula I 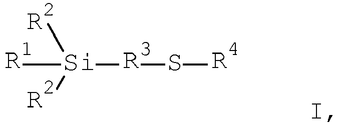 based on the mercaptosilane-carbon black blend,
wherein R¹ is an alkyl polyether group -O-(R⁵-O)ₘ-R⁶,
with R⁵, identical or different at each occurrence, being a branched or unbranched, saturated or unsaturated, aliphatic divalent C1-C30 hydrocarbon group, m being on average 1 to 30, and R⁶ consisting of at least 1 C atom and being an unsubstituted or substituted, branched or unbranched monovalent alkyl, alkenyl, aryl or aralkyl group,
R² is identical or different at each occurrence and is an R¹, C1-C12 alkyl or R⁷O group, with R⁷ being H, methyl, ethyl, propyl, C9-C30 branched or unbranched monovalent alkyl, alkenyl, aryl or aralkyl group or (R⁸)₃Si group, with R⁸ being C1-C30 branched or unbranched alkyl or alkenyl group,
R³ is a branched or unbranched, saturated or unsaturated, aliphatic, aromatic or mixed aliphatic/aromatic divalent C1-C30 hydrocarbon group, and
R⁴ is H, CN or (C=O)-R⁹, with R⁹ being a branched or unbranched, saturated or unsaturated, aliphatic, aromatic or mixed aliphatic/aromatic monovalent C1-C30 hydrocarbon group, and carbon black, **characterized in that** the mercaptosilane-carbon black blend has an iron content of < 9 ppm and comprises
a mixture of mercaptosilanes of the general formula I and/or 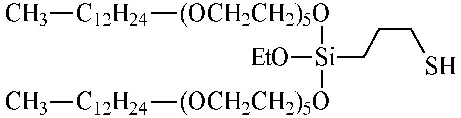 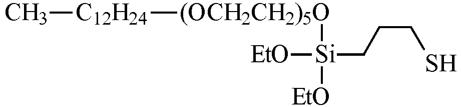 and/or hydrolysis and/or condensation products of the aforementioned compounds.

2. Use of the mercaptosilane-carbon black blend according to Claim 1 for producing rubber mixtures.

3. Rubber mixture **characterized in that** it comprises
(A) a rubber or mixture of rubbers,
(B) a filler and
(C) at least one mercaptosilane-carbon black blend according to Claim 1.

4. Method for producing the rubber mixture according to Claim 3, **characterized in that** the rubber or mixture of rubbers, the filler, optionally further rubber assistants, and also at least one mercaptosilane-carbon black blend according to Claim 1 are mixed.

5. Use of mercaptosilane-carbon black blend according to Claim 1 for producing mouldings.

6. Use of mercaptosilane-carbon black blend according to Claim 1 in pneumatic tyres, tyre treads, cable sheathing, hoses, drive belts, conveyor belts, roll coverings, other tyres, footwear soles, sealing rings and damping elements.

## Revendications

1. Mélange de mercaptosilane-noir de carbone, contenant au moins 20 % en poids d'un mercaptosilane de formule générale I 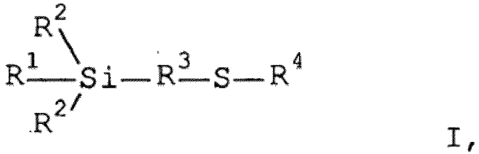 par rapport au mélange de mercaptosilane-noir de carbone,
R¹ étant un groupe alkylpolyéther -O-(R⁵-O)ₘ-R⁶,
les R⁵ étant, de manière identique ou différente, un groupe hydrocarboné aliphatique bivalent en C1-C30 ramifié ou non ramifié, saturé ou insaturé, m valant en moyenne 1 à 30, et R⁶ étant constitué par au moins 1 atome C, et étant un groupe alkyle, alcényle, aryle ou aralkyle monovalent non substitué ou substitué, ramifié ou non ramifié,
les R² étant, de manière identique ou différente, un groupe R¹-, alkyle en C1-C12 ou R⁷O-, R⁷ représentant H, méthyle, éthyle, propyle, un groupe alkyle, alcényle, aryle, aralkyle monovalent ramifié ou non ramifié en C9-30, ou un groupe (R⁸)₃Si-, R⁸ représentant un groupe alkyle ou alcényle ramifié ou non ramifié en C1-C30,
R³ étant un groupe hydrocarboné en C1-C30 bivalent ramifié ou non ramifié, saturé ou insaturé, aliphatique, aromatique ou aliphatique/aromatique mixte, et
R⁴ représentant H, CN ou (C=O)-R⁹, R⁹ représentant un groupe hydrocarboné en C1-C30 monovalent ramifié ou non ramifié, saturé ou insaturé, aliphatique, aromatique ou aliphatique/aromatique mixte, et du noir de carbone,
**caractérisé en ce que** le mélange de mercaptosilane-noir de carbone présente une teneur en fer < 9 ppm et contient un mélange de mercaptosilanes de formule générale I 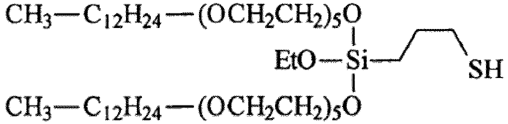 et/ou 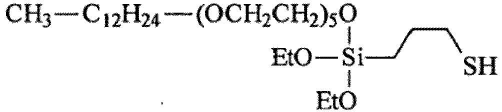 et/ou des produits d'hydrolyse et/ou de condensation des composés susmentionnés.

2. Utilisation du mélange de mercaptosilane-noir de carbone selon la revendication 1 pour la fabrication de mélanges de caoutchouc.

3. Mélange de caoutchouc, **caractérisé en ce que** celui-ci contient :
(A) un caoutchouc ou un mélange de caoutchoucs,
(B) une charge et
(C) au moins un mélange de mercaptosilane-noir de carbone selon la revendication 1.

4. Procédé de fabrication du mélange de caoutchouc selon la revendication 3, **caractérisé en ce que** le caoutchouc ou le mélange de caoutchoucs, la charge, éventuellement d'autres adjuvants de caoutchouc, ainsi qu'au moins un mélange de mercaptosilane-noir de carbone selon la revendication 1 sont mélangés.

5. Utilisation d'un mélange de mercaptosilane-noir de carbone selon la revendication 1 pour la fabrication de corps moulés.

6. Utilisation d'un mélange de mercaptosilane-noir de carbone selon la revendication 1 dans des pneumatiques, des bandes de roulement de pneus, des enrobages de câbles, des tuyaux, des courroies d'entraînement, des bandes de transport, des revêtements de cylindres, des pneus, des semelles de chaussures, des bagues d'étanchéité et des éléments d'amortissement.
